# EUROPEAN PATENT APPLICATION

(11) **EP 3 974 271 A1**
(43) Date of publication of application: **30.03.2022**
(21) Application number: 20774865.8
(22) Date of filing: 10.01.2020
(51) Int. Cl.: B60W 30/10, B60W 40/02, B60W 30/14, G01C 21/34, G01C 21/36, G05D 1/02, B60W 50/00

(54) **PATH PROVIDING DEVICE AND PATH PROVIDING METHOD THEREOF**

(30) Priority: 21.05.2019 US 201962850561 P
(71) Applicant: LG ELECTRONICS INC., Yeongdeungpo-Gu 07336 SEOUL (KR)
(72) Inventor: KIM, Jihyun, Seocho-gu Seoul 06772 (KP); BANG, Seunghwan, Seocho-gu Seoul 06772 (KP)
(74) Representative: Mooser, Sebastian Thomas
(86) International application number: PCT/KR2020/000460
(87) International publication number: WO 2020/235766

(57) **Abstract**

The present disclosure relates to a path providing device provided in a vehicle capable of communicating with at least one of a repeater and a server, and the path providing device may include a telecommunication control unit that performs communication with the repeater; and a processor that receives EHP information including at least one of an optimal path in units of lanes and field-of-view information for autonomous driving in which sensing information is merged with the optimal path from the repeater through the telecommunication control unit, and distributes the received EHP information to at least one electrical part provided in the vehicle.

## Description

### BACKGROUND

### 1. Technical Field

The present disclosure relates to a path providing device that provides a path to a vehicle and a path providing method thereof.

### 2. Description of the Related Art

A vehicle denotes a means of transporting people or goods using kinetic energy. Representative examples of vehicles include automobiles and motorcycles.

For safety and convenience of a user who uses the vehicle, various sensors and devices are provided in the vehicle, and the functions of the vehicle are diversified.

The function of the vehicle may be divided into a convenience function for promoting the convenience of a driver and a safety function for promoting the safety of a driver and/or a pedestrian.

First, the convenience function has a motive for development related to driver convenience, such as giving an infotainment (information + entertainment) function to the vehicle, supporting a partial autonomous driving function, or assisting the driver's vision such as night vision or blind spot. For example, the convenience function may include an active cruise control (ACC) function, a smart parking assist system (SPAS) function, a night vision (NV) function, a head up display (HUD) function, an around view monitor (AVM) function, and an adaptive headlight system (AHS) function, and the like.

The safety function is a technology for securing the safety of the driver and/or the safety of a pedestrian, and may include a lane departure warning system (LDWS) function, a lane keeping assist system (LKAS) function, an autonomous emergency braking (AEB) function, and the like.

For convenience of a user using a vehicle, various types of sensors and electronic devices are provided in the vehicle. In particular, for the convenience of the user's driving, research on an advanced driver assistance system (ADAS) is being actively carried out. Furthermore, development of an autonomous vehicle is being actively carried out.

In recent years, as the development of an advanced driving assist system (ADAS) is actively undergoing, development of a technology for optimizing user's convenience and safety while driving a vehicle is required.

As part of this effort, in order to effectively transmit eHorizon (electronic Horizon) data to autonomous driving systems and infotainment systems, the EU OEM (European Union Original Equipment Manufacturing) Association has established a data specification and transmission method as a standard under the name "ADASIS (ADAS (Advanced Driver Assist System) Interface Specification)."

In addition, eHorizon (software) has become an essential element of the safety/ECO/convenience of autonomous vehicles under a connected environment.

### SUMMARY

The present disclosure is contrived to solve the foregoing problems and other problems.

An aspect of the present disclosure is to provide a path providing device capable of providing field-of-view information for autonomous driving that enables autonomous driving, and a path providing method thereof.

Another aspect of the present disclosure is to provide an optimized control method of a path providing device provided in a repeater.

Still another aspect of the present disclosure is to provide a path providing device capable of providing optimized information to a vehicle when the path providing device is provided in a repeater, and a path providing method thereof.

Yet still another aspect of the present disclosure is to provide a path providing device of a vehicle optimized to use EHP information provided by the path providing device provided in a repeater, and a path providing method thereof.

The present disclosure provides a path providing device and a path providing method thereof.

A path providing device according to an embodiment of the present disclosure, as a path providing device provided in a repeater, may include a telecommunication control unit that performs communication with at least one of a server and a vehicle, and a processor that controls the telecommunication control unit to receive map information formed in a plurality of layers from a server, and receive dynamic information including sensing information from a vehicle driving in an allocated area, wherein the processor generates EHP information comprising at least one of an optimal path in units of lanes and field-of-view information for autonomous driving in which sensing information is merged with the optimal path to be transmitted to a target vehicle, using the map information and dynamic information.

According to an embodiment, the processor may receive first dynamic information related to the allocated area from a vehicle driving in the allocated area, and compare the received first dynamic information with second dynamic information included in map information received from the server to determine whether it is possible to determine map information provided in the server.

According to an embodiment, the processor may determine that it is possible to update the map information provided in the server, and upload the first dynamic information to the server when the first dynamic information is different from the second dynamic information.

According to an embodiment, the processor may receive dynamic information from a plurality of vehicles, respectively, in the allocated area, and determine the dynamic information including the content as the first dynamic information when the number of dynamic information having the same content among the received dynamic information is above a predetermined number.

According to an embodiment, the processor may upload only the determined first dynamic information among the received dynamic information to the server.

According to an embodiment, the processor may receive location information from a target vehicle that has requested EHP information in the allocated area, and generate EHP information that is usable in the target vehicle based on the received location information and the map information received from the server.

According to an embodiment, the processor may transmit the generated EHP information to the target vehicle, and generate and transmit the EHP information in real time whenever the target vehicle drives in the allocated area.

According to an embodiment, the processor may stop the transmission of the EHP information when the target vehicle leaves the allocated area.

According to an embodiment, the processor may transmit the generated EHP information to a new repeater when the target vehicle leaves the allocated area to enter the allocation area of the new repeater.

According to an embodiment, the path providing device may further include a memory that stores partial map information for the allocated area, wherein the processor updates the partial map information using dynamic information transmitted from a vehicle included in the allocated area, and generates EHP information of a target vehicle driving in the allocated area using the partial map information.

A path providing device according to another embodiment of the present disclosure, as a path providing device provided in a vehicle capable of communicating with at least one of a repeater and a server, may include a telecommunication control unit that performs communication with the repeater; and a processor that receives EHP information including at least one of an optimal path in units of lanes and field-of-view information for autonomous driving in which sensing information is merged with the optimal path from the repeater through the telecommunication control unit, and distributes the received EHP information to at least one electrical part provided in the vehicle.

According to an embodiment, the processor may receive the EHP information generated by the repeater to change the information to a form that is usable in the electrical part.

According to an embodiment, the processor may output a lane-based optimal path or autonomously drive the vehicle using the received EHP information.

According to an embodiment, the processor may search for a new repeater when it is sensed that the vehicle leaves an allocated area of the repeater in communication.

According to an embodiment, the processor may receive EHP information from the new repeater when the new repeater is searched, and receive EHP information from a server through the telecommunication control unit when the new repeater is not searched.

According to an embodiment, the telecommunication control unit may perform communication with the server, and the processor may receive first EHP information from the repeater through the telecommunication control unit, and receive second EHP information from the server.

According to an embodiment, the processor may process the first EHP information and the second EHP information in a preset manner.

According to an embodiment, when the first EHP information and the second EHP information are the same, the processor may receive the first EHP information from the repeater, and stop receiving the second EHP information from the server.

According to an embodiment, when the first EHP information and the second EHP information are different from each other, the processor may transmit different EHP information to an electrical part provided in the vehicle according to the type of the electrical part provided in the vehicle.

According to an embodiment, when the first EHP information and the second EHP information are different from each other, the processor may autonomously drive the vehicle using at least one of the first EHP information and the second EHP information.

The effects of a path providing device and a path providing method thereof according to the present disclosure will be described as follows.

First, the present disclosure may provide a path providing device capable of controlling a vehicle in an optimized manner when the path providing device is provided in a repeater.

Second, the present disclosure may allow a path providing device to be provided in a repeater that relays communication between a server and a vehicle, thereby preventing the server from being overloaded.

Third, the present disclosure may allow a path providing device to be provided in a repeater that relays communication between a server and a vehicle, thereby providing a new path providing method capable of generating EHP information for an area allocated by the repeater in an optimized manner and transmitting it to the vehicle included in the allocated area.

### BRIEF DESCRIPTION OF THE DRAWINGS

FIG. 1 is a view illustrating an appearance of a vehicle according to an embodiment of the present disclosure.
FIG. 2 is a view in which a vehicle according to an embodiment of the present disclosure is viewed at various angles from the outside.
FIGS. 3 and 4 are views illustrating an inside of a vehicle according to an embodiment of the present disclosure.
FIGS. 5 and 6 are views referenced to describe objects according to an embodiment of the present disclosure.
FIG. 7 is a block diagram referenced to describe a vehicle according to an embodiment of the present disclosure.
FIG. 8 is a conceptual view for explaining an electronic horizon provider (EHP) associated with the present disclosure.
FIG. 9 is a block diagram for explaining the path providing device of FIG. 8 in more detail.
FIG. 10 is a conceptual view for explaining eHorizon associated with the present disclosure.
FIGS. 11A and 11B are conceptual views for explaining a local dynamic map (LDM) and an advanced driver assistance system (ADAS) MAP associated with the present disclosure.
FIGS. 12A and 12B are exemplary views for explaining a method of receiving high-definition map data by a path providing device according to an embodiment of the present disclosure.
FIG. 13 is a flowchart for explaining a method of allowing a path providing device to receive a high-definition map and generate field-of-view information for autonomous driving.
FIG. 14 is a conceptual view for explaining a processor included in a path providing device according of the present disclosure.
FIG. 15 is a conceptual view for explaining a path providing device provided in a server.
FIG. 16 is a conceptual view for explaining a configuration of a vehicle for receiving information from a path providing device provided in a server.
FIG. 17 is a flowchart for explaining a representative control method of the present disclosure.
FIGS. 18 and 19 are conceptual views for explaining a path providing device provided in a repeater according to an embodiment of the present disclosure.
FIGS. 20, 21A and 21B are conceptual views for explaining various embodiments of a server, a repeater, and a vehicle when a path providing device according to an embodiment of the present disclosure is provided in the repeater.
FIG. 22 is a conceptual view for explaining a function of a vehicle capable of receiving EHP information from a server and a repeater according to an embodiment of the present disclosure.

### DETAILED DESCRIPTION OF THE EMBODIMENTS

Hereinafter, the embodiments disclosed herein will be described in detail with reference to the accompanying drawings, and the same or similar elements are designated with the same numeral references regardless of the numerals in the drawings and their redundant description will be omitted. A suffix "module" and "unit" used for constituent elements disclosed in the following description is merely intended for easy description of the specification, and the suffix itself does not give any special meaning or function. In describing the embodiments disclosed herein, moreover, the detailed description will be omitted when specific description for publicly known technologies to which the invention pertains is judged to obscure the gist of the present invention. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

A vehicle according to an embodiment of the present disclosure may be understood as a conception including cars, motorcycles and the like. Hereinafter, the vehicle will be described based on a car.

The vehicle according to the embodiment of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

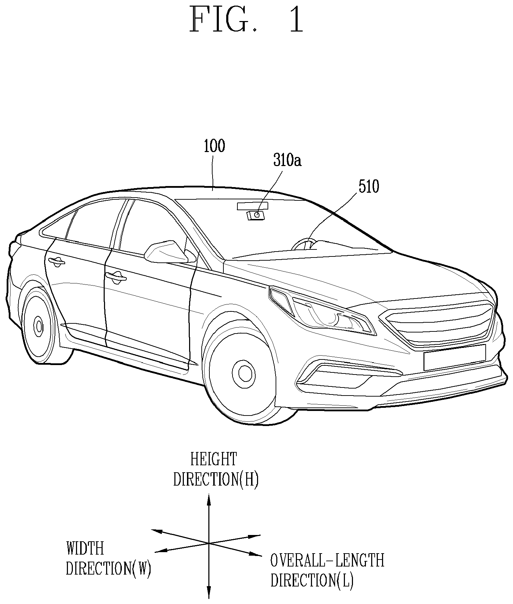

FIG. 1 is a view illustrating an appearance of a vehicle according to an embodiment of the present disclosure.

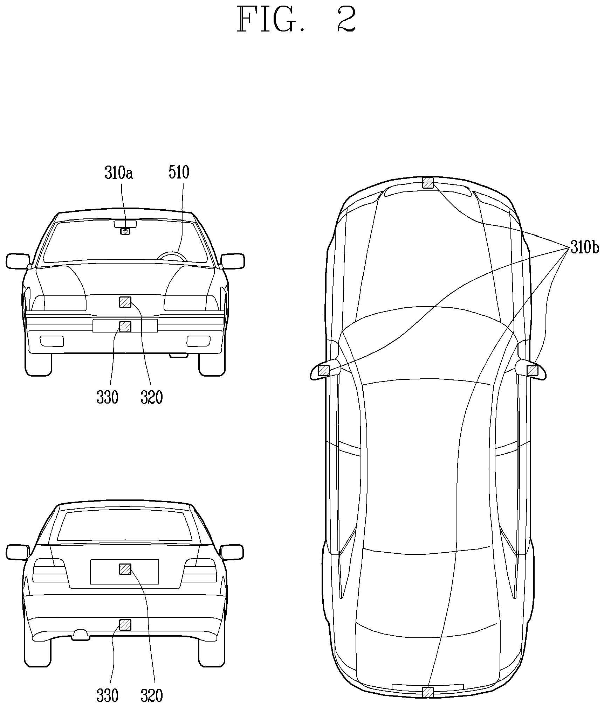

FIG. 2 is a view in which a vehicle according to an embodiment of the present disclosure is viewed at various angles from the outside.

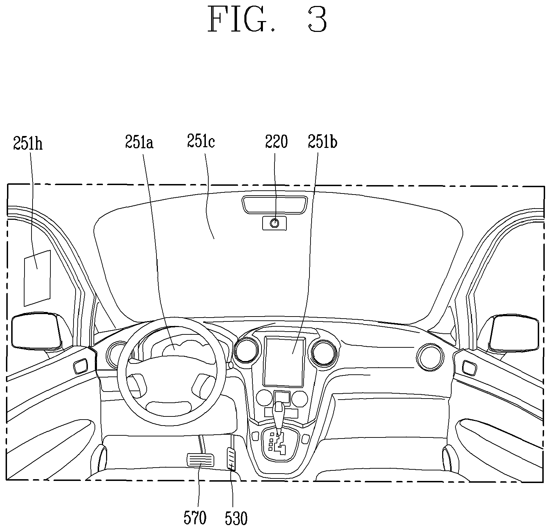

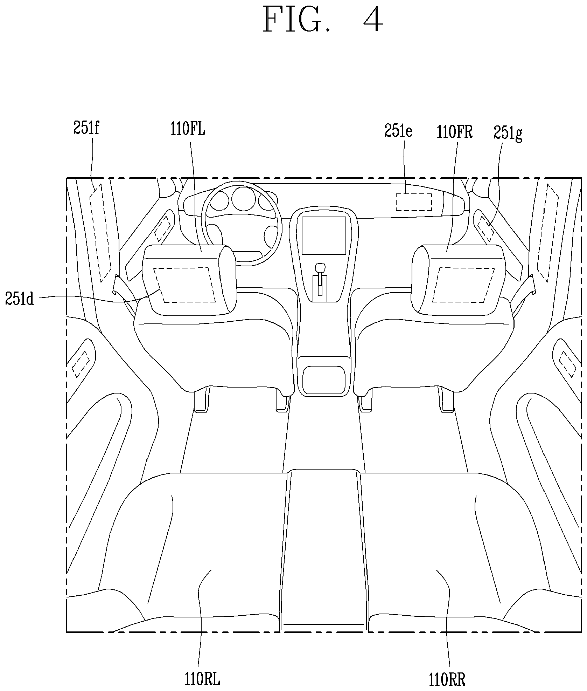

FIGS. 3 and 4 are views illustrating an inside of a vehicle according to an embodiment of the present disclosure.

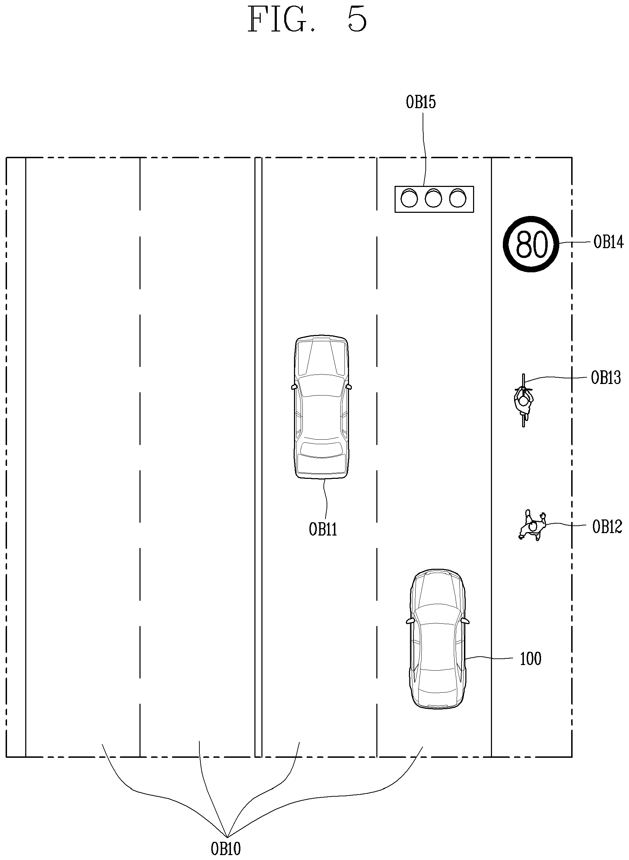

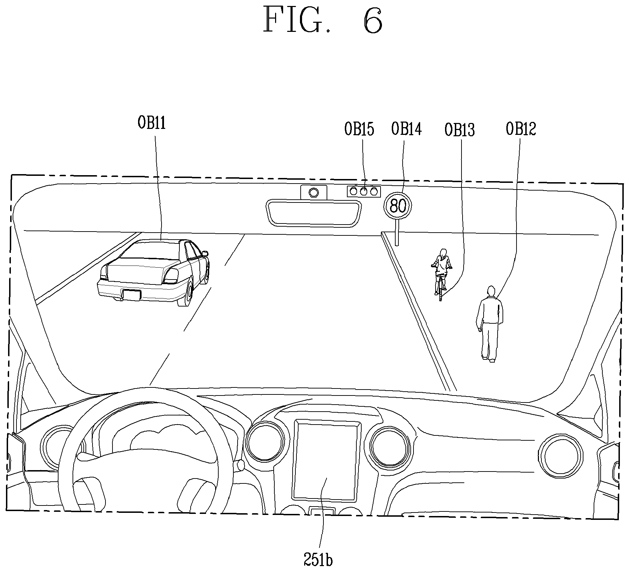

FIGS. 5 and 6 are views referenced to describe objects according to an embodiment of the present disclosure.

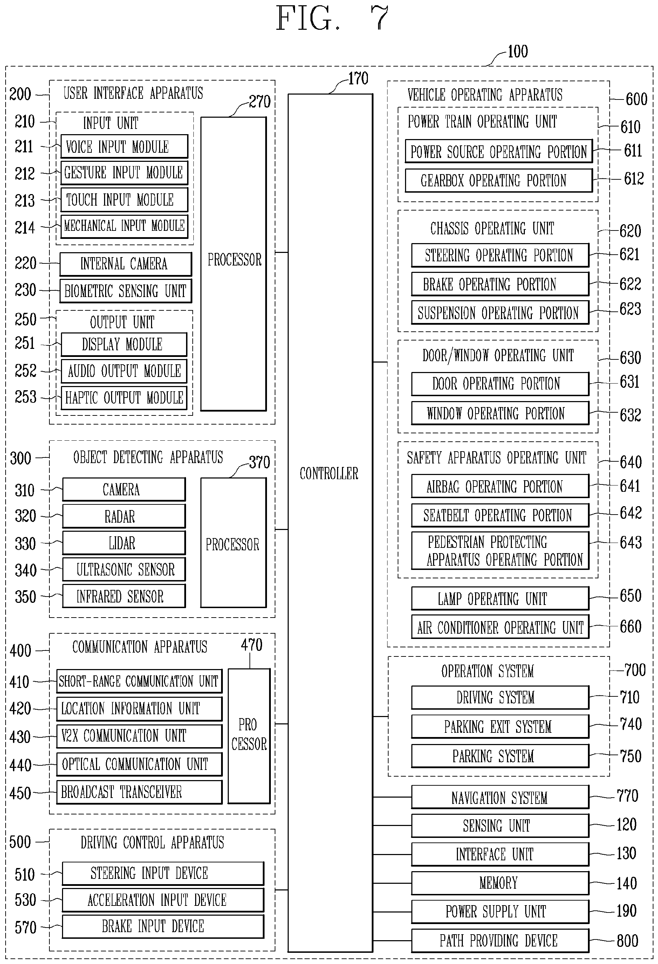

FIG. 7 is a block diagram referenced to describe a vehicle according to an embodiment of the present disclosure.

Referring to FIGS. 1 through 7, a vehicle 100 may include wheels turning by a driving force, and a steering apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle may be converted from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300.

For example, the vehicle 100 may be switched from the manual mode into the autonomous mode or from the autonomous module into the manual mode based on driving environment information generated in the object detecting apparatus 300.

In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700.

For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface apparatus 200, an object detecting apparatus 300, a communication apparatus 400, a driving control apparatus 500, a vehicle operating apparatus 600, an operation system 700, a navigation system 770, a sensing unit 120, a vehicle interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 200 may implement user interfaces (Uls) or user experiences (UXs) through the user interface apparatus 200.

The user interface apparatus 200 may include an input unit 210, an internal camera 220, a biometric sensing unit 230, an output unit 250 and a processor 270.

According to embodiments, the user interface apparatus 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 210 may be disposed within the vehicle. For example, the input unit 200 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170.

The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input.

According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input.

According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel, and a jog switch. An electric signal generated by the mechanical input module 214 may be provided to the processor 270 or the controller 170.

The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal.

The output unit 250 may include at least one of a display module 251, an audio output module 252 and a haptic output module 253.

The display module 251 may output graphic objects corresponding to various types of information.

The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window.

The transparent display may have a predetermined degree of transparency and output a predetermined screen thereon. The transparent display may include at least one of a transparent TFEL (Thin Film Electroluminescent), a transparent OLED (Organic Light-Emitting Diode), a transparent LCD (Liquid Crystal Display), a transmissive transparent display, and a transparent LED (Light Emitting Diode) display. The transparent display may have adjustable transparency.

Meanwhile, the user interface apparatus 200 may include a plurality of display modules 251 a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 converts an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor 270 may control an overall operation of each unit of the user interface apparatus 200.

According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle.

The user interface apparatus 200 may operate according to the control of the controller 170.

The object detecting apparatus 300 is an apparatus for detecting an object located at outside of the vehicle 100.

The object may be a variety of objects associated with driving (operation) of the vehicle 100.

Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a geographical feature, an animal and the like.

The lane OB01 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB13 may refer to a vehicle (transportation facility) that is located near the vehicle 100 and moves using two wheels. The two-wheeled vehicle OB13 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The geographical feature may include a mountain, a hill and the like.

Meanwhile, objects may be classified into a moving object and a fixed object. For example, the moving object may be a concept including another vehicle and a pedestrian. The fixed object may be a concept including a traffic signal, a road and a structure.

The object detecting apparatus 300 may include a camera 310, a radar 320, a lidar 330, an ultrasonic sensor 340, an infrared sensor 350 and a processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an AVM (Around View Monitoring) camera 310b, or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented by a Frequency Modulated Continuous Wave (FMCW) scheme or a Frequency Shift Keying (FSK) scheme according to a signal waveform in a continuous wave radar scheme.

The radar 320 may detect an object in a time of flight (TOF) manner or a phase-shift manner through the medium of electromagnetic waves, and detect a position of the detected object, a distance from the detected object and a relative speed with the detected object.

The radar 320 may be disposed on an appropriate position outside the vehicle for detecting an object which is located at a front, rear or side of the vehicle.

The lidar 330 may include laser transmitting and receiving portions. The lidar 330 may be implemented in a time of flight (TOF) manner or a phase-shift manner.

The lidar 330 may be implemented as a drive type or a non-drive type.

For the drive type, the lidar 330 may be rotated by a motor and detect object near the vehicle 100.

For the non-drive type, the lidar 330 may detect, through light steering, objects which are located within a predetermined range based on the vehicle 100. The vehicle 100 may include a plurality of non-drive type lidars 330.

The lidar 330 may detect an object in a time of flight (TOF) manner or a phase-shift manner through the medium of laser light, and detect a position of the detected object, a distance from the detected object and a relative speed with the detected object.

The lidar 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the lidar 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (vehicle to infrastructure; V2I), another vehicle (vehicle to vehicle; V2V), or a pedestrian (vehicle to pedestrian; V2P). The V2X communication unit 430 may include an RF circuit capable of implementing a communication protocol with an infrastructure (V2I), a communication protocol between vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touchpad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. According to some embodiments, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

Meanwhile, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis device.

The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating portion 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may be operated in the autonomous driving mode.

The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include a processor. Each unit of the operation system 700 may individually include a processor.

Meanwhile, according to embodiments, the operation system may be a sub concept of the controller 170 when it is implemented in a software configuration.

Meanwhile, according to embodiment, the operation system 700 may be a concept including at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100.

The driving system 710 may receive object information from the object detecting apparatus 300, transmit a control signal to the vehicle operating apparatus 600 and perform driving of the vehicle 100.

The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot.

The parking exit system 740 may receive object information from the object detecting apparatus 300, transmit a control signal to the vehicle operating apparatus 600 and perform the exit of the vehicle 100 from the parking lot.

The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100.

The parking system 750 may receive object information from the object detecting apparatus 300, transmit a control signal to the vehicle operating apparatus 600 and park the vehicle 100.

The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface unit 130 may serve as a path allowing the vehicle 100 to interface with various types of external devices connected thereto. For example, the vehicle interface unit 130 may be provided with a port connectable with a mobile terminal, and connected to the mobile terminal through the port. In this instance, the vehicle interface unit 130 may exchange data with the mobile terminal.

Meanwhile, the vehicle interface unit 130 may serve as a path for supplying electric energy to the connected mobile terminal. When the mobile terminal is electrically connected to the vehicle interface unit 130, the vehicle interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be various storage apparatuses such as a ROM, a RAM, an EPROM, a flash drive, a hard drive, and the like in terms of hardware. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the vehicle 100 according to the present disclosure may include a path providing device 800.

The path providing device 800 may control at least one of those components illustrated in FIG. 7. From this perspective, the path providing device 800 may be the controller 170.

Without a limit to this, the path providing device 800 may be a separate device, independent of the controller 170. When the path providing device 800 is implemented as a component independent of the controller 170, the path providing device 800 may be provided on a part of the vehicle 100.

Hereinafter, description will be given of an example that the path providing device 800 is a component separate from the controller 170 for the sake of explanation. In this specification, functions (operations) and control methods described in relation to the path providing device 800 may be executed by the controller 170 of the vehicle. In other words, every detail described in relation to the path providing device 800 may be applied to the controller 170 in the same/like manner.

Furthermore, the path providing device 800 described herein may include some of the components illustrated in FIG. 7 and various components included in the vehicle. For the sake of explanation, the components illustrated in FIG. 7 and the various components included in the vehicle will be described with separate names and reference numbers.

Hereinafter, a method of autonomously driving a vehicle associated with the present disclosure in an optimized manner or priding path information optimized for driving a vehicle will be described in more detail with reference to the accompanying drawings.

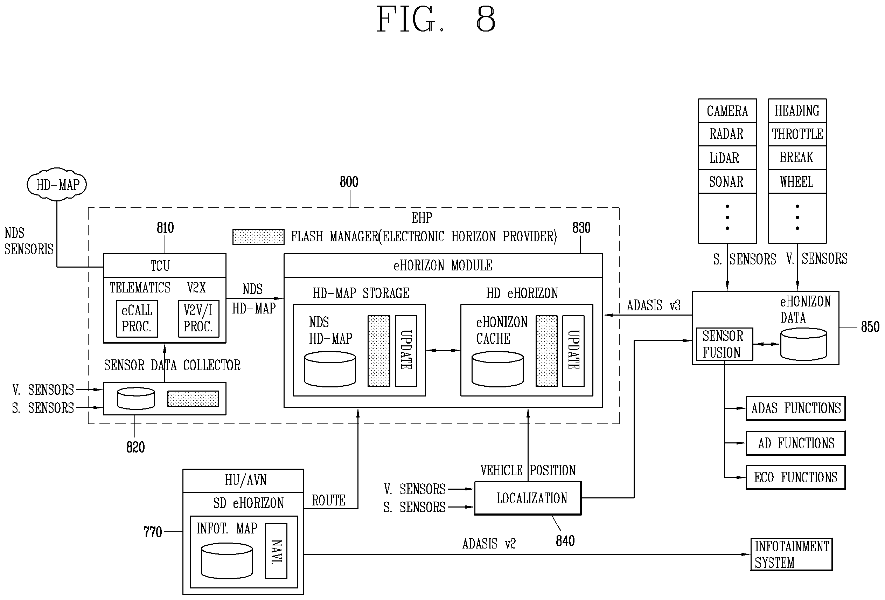

FIG. 8 is a conceptual view for explaining an electronic horizon provider (EHP) associated with the present disclosure.

Referring to FIG. 8, a map providing device 800 associated with the present disclosure may control a vehicle 100 on the basis of eHorizon.

The path providing device 800 may include an EHP (Electronic Horizon Provider). The EHP may be referred to as a processor 830 in this specification.

Here, Electronic Horizon may be referred to as 'ADAS Horizon', 'ADASIS Horizon', 'Extended Driver Horizon' or 'eHorizon'.

The eHorizon may be understood as software, a module, a device or a system that performs the role of generating a vehicle's forward path information using high-definition (HD) map data, configuring it based on a specified standard (protocol) (e.g., a standard specification defined by the ADAS), and transmitting the configured data to an application (e.g., an ADAS application, a map application, etc.) installed in a module (for example, an ECU, a controller 170, a navigation system 770, etc.) of the vehicle or in the vehicle requiring map information (or path information).

The device implementing an operation/function/control method performed by the eHorizon may be the processor 830 (EHP) and/or the path providing device 800. In other words, the processor 830 may be provided with or include the eHorizon described in this specification.

In the past, the vehicle's forward path (or a path to the destination) has been provided as a single path based on a navigation map (or a path to the destination), but eHorizon may provide lane-based path information based on a high-definition (HD) map.

The data generated by eHorizon may be referred to as "electronic horizon data" or "eHorizon data" or "field-of-view information for autonomous driving" or an "ADASIS message."

The electronic horizon data may be described with driving plan data used when generating a driving control signal of the vehicle 100 in a driving system. For example, the electronic horizon data may be understood as driving plan data within a range from a point where the vehicle 100 is located to a horizon (field-of-view) (a predetermined distance or destination).

Here, the horizon may be understood a range from a point where the vehicle 100 is located to a point in front of a predetermined distance on the basis of a preset driving path. The horizon may denote a point at which the vehicle 100 can reach after a preset period of time from a point where the vehicle 100 is located along a preset driving path. Here, the driving path may denote a driving path to a final destination or an optimal path on which the vehicle is expected to drive when the destination is not set. The destination may be set by a user input.

The electronic horizon data may include horizon map data and the horizon pass data. The horizon map data may include at least one of topology data, ADAS data, HD map data, and dynamic data. According to an embodiment, the horizon map data may include a plurality of layers. For example, the horizon map data may include a first layer matching (corresponding) to topology data, a second layer matched with ADAS data, a third layer matched with HD map data, and a fourth layer matched with dynamic data. The horizon map data may further include static object data.

The topology data may be described as a map created by connecting the center of the road. The topology data is suitable for roughly indicating the location of a vehicle, and may be in the form of data used primarily in navigation for a driver. The topology data may be understood as data on road information excluding information on lanes. The topology data may be generated based on data received at an infrastructure via V2I. The topology data may be based on data generated by the infrastructure. The topology data may be based on data stored in at least one memory provided in the vehicle 100.

The ADAS data may denote data related to road information. The ADAS data may include at least one of slope data of roads, curvature data of roads, and speed limit data of roads. The ADAS data may further include no overtaking section data. The ADAS data may be based on data generated by the infrastructure 20. The ADAS data may be based on data generated by the object detecting apparatus 210. The ADAS data may be referred to as road information data.

The HD map data may include topology information in a detailed lane unit of roads, connection information of each lane, feature information (e.g., traffic sign, lane marking/attribute, road furniture, etc.) for localization of a vehicle. The HD map data may be based on data generated by the infrastructure.

The dynamic data may include various dynamic information that can be generated on a road. For example, the dynamic data may include construction information, variable speed lane information, road surface state information, traffic information, moving object information, and the like. The dynamic data may be based on data received from the infrastructure 20. The dynamic data may be based on data generated by the object detecting apparatus 210.

The path providing device 800 may provide map data within a range from a point where the vehicle 100 is located to a horizon. The horizon pass data may be described as a trajectory that can be taken by the vehicle 100 within a range from a point where the vehicle 100 is located to a horizon. The horizon pass data may include data indicating a relative probability of selecting any one road at a decision point (e.g., a crossroad, a junction, an intersection, etc.). The relative probability may be calculated based on time taken to arrive at the final destination. For example, when the time taken to arrive at the final destination in case of selecting a first road is shorter than that in case of selecting a second road at a decision point, the probability of selecting the first road may be calculated higher than that of selecting the second road.

The horizon pass data may include a main path and a sub path. The main path may be understood as a trajectory connecting roads with a relatively high probability of being selected. The sub path may be branched from at least one decision point on the main path. The sub path may be understood as a trajectory connecting at least any one road having a low relative probability of being selected on at least one decision point on the main path.

The main path may be referred to as an optimal path in the present specification, and the sub path may be referred to as a sub path.

eHorizon may be classified into categories such as software, a system, a concept, and the like. The eHorizon denotes a configuration in which road shape information on a high-definition map under a connected environment such as an external server (cloud server), V2X (vehicle to everything) or the like and real-time events and dynamic information on dynamic objects such as real-time traffic signs, road surface conditions, accidents and the like are merged to provide relevant information to autonomous driving systems and infotainment systems.

In other words, eHorizon may perform the role of transferring a precision map road shape and real time events in front of the vehicle to autonomous driving systems and infotainment systems under an external server/V2X environment.

In order to effectively transfer eHorizon data (electronic horizon data or or field-of-view information for autonomous driving) transmitted (generated) from the eHorizon to autonomous driving systems and infotainment systems, a data specification and transmission method may be formed in accordance with a standard called "ADASIS (Advanced Driver Assistance Systems Interface Specification)."

The vehicle control device 100 associated with the present disclosure may use information received (generated) from eHorizon for autonomous driving systems and/or infotainment systems.

For example, an autonomous navigation system may use information provided by eHorizon data provided by eHorizon in the safety and ECO aspects.

In terms of the safety aspect, the vehicle 100 (or path providing device 800) according to the present disclosure may perform an ADAS (Advanced Driver Assistance System) function such as LKA (Lane Keeping Assist), TJA (Traffic Jam Assist) or the like, and/or an AD (AutoDrive) function such as advance, road joining, lane change or the like using road shape information and event information received from eHorizon and surrounding object information sensed through the sensing unit 840 provided in the vehicle.

Furthermore, in terms of the ECO aspect, the vehicle 100 (or path providing device 800) may receive inclination information, traffic light information, and the like on a front road from eHorizon to control the vehicle so as to achieve efficient engine output, thereby enhancing fuel efficiency.

The infotainment system may include convenience aspects.

For an example, the vehicle 100 (or path providing device 800) may receive accident information, road surface condition information, and the like on a front road received from eHorizon to output them on a display module (for example, HUD (Head Up Display), CID, Cluster, etc.) provided in the vehicle to provide guide information for allowing the driver to perform safe driving.

The eHorizon may receive the location information of various event information (e.g., road surface condition information, construction information, accident information, etc.) generated from a road and/or road specific speed limit information from the present vehicle 100 or other vehicles or collect them from an infrastructure (e.g., a measuring device, a sensing device, a camera, etc.) installed on a road.

Furthermore, the event information and the road specific speed limit information may be linked to map information or may be updated.

In addition, the location information of the event information may be divided into units of lanes.

Using the information, the eHorizon (or EHP) of the present disclosure may provide information required for autonomous driving system and infotainment systems to each vehicle based on a precision map capable of determining a road situation (or road information) in units of lanes.

In other words, the Electronic Horizon Provider (EHP) (eHorizon Provider) of the present disclosure may provide an absolute high-definition map using an absolute coordinate of information (for example, event information, location information of the present vehicle 100, etc.) associated with a road based on a high-definition map.

The information associated with a road provided by the eHorizon may be provided with information provided within a predetermined area (predetermined space) with respect to the present vehicle 100.

The EHP (Electronic Horizon Provider) may be understood as a component included in the eHorizon system to perform a function provided by the eHorizon (or eHorizon system).

The path providing device 800 of the present disclosure may be an EHP, as illustrated in FIG. 8.

The path providing device 800 (EHP) of the present disclosure may receive a high-definition map from an external server (or cloud server), generate path information to a destination in units of lanes, and transmit the high-definition map and the path information generated in units of lanes to a module or application (or program) of a vehicle that needs the map information and path information.

Referring to FIG. 8, the overall structure of the electronic horizon system of the present disclosure is illustrated in FIG. 8.

The path providing device 800 of the present disclosure may include a telecommunication control unit (TCU) 810 for receiving a high-definition (HD) map existing in a cloud server.

The telecommunication control unit 810 may be a communication apparatus 400 described above, and may include at least one of components included in the communication apparatus 400.

The telecommunication control unit 810 may include a telematics module or a V2X (vehicle to everything) module.

The telecommunication control unit 810 may receive a high-definition (HD) map according to the Navigation Data Standard (NDS) (or conforming to the NDS standard) from a cloud server.

In addition, the high-definition (HD) map may be updated by reflecting data sensed through a sensor provided in a vehicle and/or a sensor installed on an adjacent road according to a sensor ingestion interface specification (SENSORIS) which is a sensor ingestion interface specification.

The telecommunication control unit 810 may download a HD-map from a cloud server through the telematics module or the V2X module.

The map providing device 800 of the present disclosure may include an interface unit 820. The interface unit 820 receives sensing information from one or more sensors provided in the vehicle 100.

The interface unit 820 may be referred to as a sensor data collector.

The interface unit 820 may collect (receive) information sensed through sensors (for example, sensors (V. sensors) (e.g., heading, throttle, break, wheel, etc.) for sensing the operation of a vehicle) and sensors (S. sensors) (e.g., camera, radar, LiDAR, sonar, etc.) for sensing the surrounding information of a vehicle).

The interface unit 820 may transmit the information sensed through the sensors provided in a vehicle to the telecommunication control unit 810 (or the processor 830) to reflect the information on the high-definition map.

The telecommunication control unit 810 may update the high-definition map stored in the cloud server by transmitting the information transmitted from the interface unit 820 to the cloud server.

The path providing device 800 of the present disclosure may include a processor 830 (or an eHorizon module) (EHP).

In this specification, the EHP may be the path providing device 800 or the processor 830.

The processor 830 may control the telecommunication control unit 810 and the interface unit 820.

The processor 830 may store a high-definition map received through the telecommunication control unit 810, and update the high-definition map using information received through the interface unit 820. Such an operation may be carried out in the storage unit of the processor 830.

The processor 830 may receive first path information from an AVN (Audio Video Navigation) or a navigation system 770.

The first path information, as path information provided in the related art, may be information for guiding a driving path to a destination.

At this time, the first path information provided in the related art provides only one path information, and does not distinguish lanes. The first path information may merely guide a road through which the vehicle must drive (pass) in order to reach a destination, but may not guide which lane to drive in the relevant road.

On the other hand, when the processor 830 receives the first path information, the processor 830 may generate second path information for guiding a driving path to a destination set in the first path information in units of lanes using a high-definition (HD) map and the first path information. Such an operation may be carried out in the operation unit 834 of the processor 830, for an example.

In addition, the eHorizon system may include a localization unit 840 for locating a vehicle using information sensed through sensors (V. sensors, S. sensors) provided in the vehicle.

The localization unit 840 may transmit the location information of the vehicle to the processor 830 so as to match (map) to the location of the vehicle detected using the sensors provided in the vehicle with the high-definition map.

The processor 830 may match the location of the vehicle 100 to the high-definition map based on the location information of the vehicle. Meanwhile, the localization unit 840 may, on its own, match (map) to the current location of the vehicle to a high-definition map based on the location information of the vehicle.

The processor 830 may generate electronic horizon data. Furthermore, the processor 830 may generate horizon pass data.

The processor 830 may generate the electronic horizon data by reflecting the driving environment of the vehicle 100. For example, the processor 830 may generate the electronic horizon data based on the driving direction data and the driving speed data of the vehicle 100.

The processor 830 may merge the generated electronic horizon data with previously generated electronic horizon data. For example, the processor 830 may positionally connect horizon map data generated at a first time point with horizon map data generated at a second time point. For example, the processor 830 may positionally connect horizon pass data generated at a first time point with horizon pass data generated at a second time point.

The processor 830 may include a memory, an HD map processing unit, a dynamic data processing unit, a matching unit, and a path generation unit.

The HD map processing unit may receive HD map data from a server via the communication device. The HD map processing unit may store the HD map data. According to an embodiment, the HD map processing unit may process and refine the HD map data. The dynamic data processing unit may receive dynamic data from the object detecting apparatus. The dynamic data processing unit may receive dynamic data from the server. The dynamic data processing unit may store dynamic data. According to an embodiment, the dynamic data processing unit 172 may process and refine the dynamic data.

The matching unit may receive a HD map from the HD map processing unit 171. The matching unit may receive dynamic data from the dynamic data processing unit. The matching unit may generate horizon map data by matching the HD map data and the dynamic data.

According to an embodiment, the matching unit may receive topology data. The matching unit may ADAS data. The matching unit may generate horizon map data by matching the topology data, the ADAS data, the HD map data, and the dynamic data. The path generation unit may generate horizon pass data. The path generation unit may include a main path generation unit and a sub path generation unit. The main path generation unit may generate main pass data. The sub path generation unit may generate sub pass data.

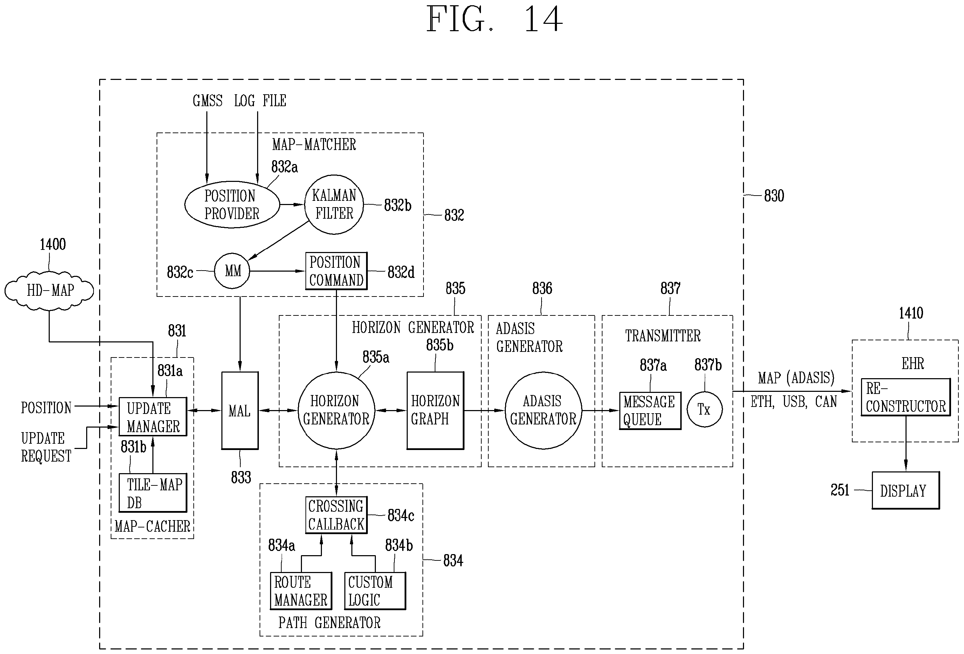

The specific structure of the processor 830 (EHP) will be described later in more detail with reference to FIG. 14.

Furthermore, the eHorizon system may include a merge unit 850 that merges information (data) sensed by sensors provided in the vehicle with eHorizon data formed by the eHorizon module (controller).

For example, the merge unit 850 may update a high-definition map by merging sensor data sensed in the vehicle to a high-definition map corresponding to eHozion data, and provide the updated high-definition map to an ADAS function, an AD (AutoDrive) function or an ECO function.

For an example, the processor 830 may generate/update dynamic information based on the sensor data.

The merge unit 850 (or processor 830) may merge the dynamic information into electronic horizon data (field-of-view information for autonomous driving).

In addition, although not shown, the merge unit 850 may also provide the updated high-definition map to the infotainment system.

In FIG. 8, it is illustrated that the path providing device 800 (EHP) of the present disclosure includes only the telecommunication control unit 810, the interface unit 820, and the processor 830, but the present disclosure is not limited thereto.

The path providing device 800 of the present disclosure may further include at least one of a localization unit 840 and a merge unit 850.

In addition, the path providing device 800 (EHP) of the present disclosure may further include a navigation system 770.

Through the above arrangement, when at least one of the localization unit 840, the merge unit 850, and the navigation system 770 is included in the path providing device 800 (EHP) of the present disclosure, it may be understood that the function/operation/control carried out by the component included therein is carried out by the processor 830.

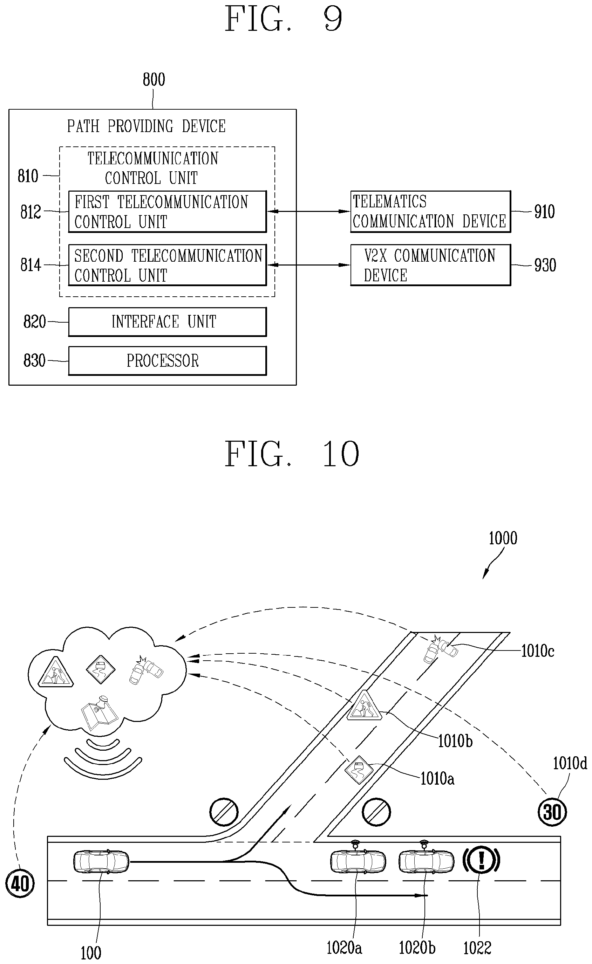

FIG. 9 is a block diagram for explaining the path providing device of FIG. 8 in more detail.

The path providing device denotes a device for providing a path to a vehicle. In other words, the path providing device may generate and output a path on which the vehicle drives so as to recommend/provide the path on which the vehicle drives to a driver on board the vehicle.

Furthermore, the path providing device may be a device mounted on a vehicle to perform communication via CAN communication, and generate a message for controlling a vehicle and/or an electrical part mounted on the vehicle (or an electrical part provided in the vehicle). Here, the electrical part mounted on the vehicle may denotes various components provided in the vehicle described with reference to FIGS. 1 through 8.

As described above, the message may denote an ADASIS message in which data generated by eHorizon is generated according to the ADASIS standard specification.

For another example, the path providing device may be located outside the vehicle, such as a server or a communication device, to communicate with the vehicle through a mobile communication network. In this case, the path providing device may remotely control the vehicle and/or the electrical part mounted on the vehicle using the mobile communication network.

The path providing device 800 is provided in the vehicle, and may be configured with an independent device that is attachable and detachable from the vehicle, or may be a component of the vehicle installed integrally with the vehicle.

Referring to FIG. 9, the path providing device 800 includes a telecommunication control unit 810, an interface unit 820, and a processor 830.

The telecommunication control unit 810 is configured to perform communication with various components provided in the vehicle.

For an example, the telecommunication control unit 810 may receive various information provided through a controller area network (CAN).

The telecommunication control unit 810 includes a first telecommunication control unit 812, and the first telecommunication control unit 812 may receive a high-definition map provided through telematics. In other words, the first telecommunication control unit 812 performs 'telematics communication'. The telematics communication may perform communication with a server or the like using a satellite navigation system satellite or a base station provided by mobile communication such as 4G and 5G.

The first telecommunication control unit 812 may perform communication with a telematics communication device 910. The telematics communication device may include a server provided by a portal provider, a vehicle provider, and/or a mobile communication company.

The processor 840 of the path providing device 800 of the present disclosure may determine the absolute coordinates of information (event information) related to a road based on the ADAS MAP received from an external server (eHorizon) through the eHorizon module 812. In addition, the processor 830 may perform autonomous driving or vehicle control on the present vehicle using the absolute coordinates of information (event information) related to the road.

The telecommunication control unit 810 includes a second telecommunication control unit 814, and the second telecommunication control unit 814 may receive various information provided through V2X (Vehicle to everything). In other words, the second telecommunication control unit 814 is configured to perform 'V2X communication'. V2X communication may be defined as a technology that exchanges information such as traffic situation while communicating with road infrastructure and other vehicles while driving.

The second telecommunication control unit 814 may perform communication with a V2X communication device 930. The V2X communication device may include a mobile terminal possessed by a pedestrian or a bicycle rider, a stationary terminal installed on a road, another vehicle, and the like.

Here, the another vehicle may denote at least one of vehicles existing within a predetermined distance with respect to the present vehicle 100 or vehicles entering a predetermined distance with respect to the present vehicle 100.

The present disclosure may not be necessarily limited thereto, and the another vehicle may include all vehicles capable of communicating with the telecommunication control unit 810. In the present specification, for the sake of convenience of explanation, a case where the nearby vehicle exists within a predetermined distance from the present vehicle 100 or enters within the predetermined distance will be described as an example.

The predetermined distance may be determined based on a communicable distance through the telecommunication control unit 810, determined according to the specification of a product, or may be determined or varied based on a user's setting or the standard of V2X communication.

The second telecommunication control unit 814 may be formed to receive LDM data from another vehicle. The LDM data may be a V2X message (BSM, CAM, DENM, etc.) transmitted and received between vehicles through V2X communication.

The LDM data may include the location information of another vehicle.

Based on the location information of the present vehicle and the location information of another vehicle included in LDM data received through the second telecommunication control unit 814, the processor 830 may determine a relative location between the present vehicle and another vehicle.

Furthermore, the LDM data may include the speed information of another vehicle. The processor 830 may also determine a relative speed of another vehicle using the speed information of the present vehicle and the speed information of the another vehicle. The speed information of the present vehicle may be calculated using a degree to which the location information of the vehicle changes over time or calculated based on information received from the driving control apparatus 500 or the power train operating unit 610 of the vehicle 100.

The second telecommunication control unit 814 may be the V2X communication unit 430 described above.

If the telecommunication control unit 810 is a component that communicates with a device located outside the vehicle 100 using wireless communication, the interface unit 820 is a component that communicates with a device located inside the vehicle 100 using wired or wireless communication.

The interface unit 820 may receive information related to the driving of the vehicle from most of the electrical parts provided in the vehicle. Information transmitted from an electrical part provided in the vehicle 100 to the path providing device 800 is referred to as 'vehicle driving information.'

For an example, when the electrical part is a sensor, the vehicle driving information may be sensing information sensed by the sensor.

The vehicle driving information includes vehicle information and surrounding information of the vehicle. The information related to an inside of the vehicle with respect to the frame of the vehicle 100 may be defined as vehicle information, and the information related to an outside of the vehicle may be defined as surrounding information.

Vehicle information denotes information on the vehicle itself. For example, the vehicle information may include at least one of a driving speed of the vehicle, a driving direction, an acceleration, an angular speed, a position (GPS), a weight, a number of vehicle occupants, a braking force of the vehicle, a maximum braking force of the vehicle, an air pressure of each wheel, a centrifugal force applied to the vehicle, a driving mode of the vehicle (whether it is an autonomous driving mode or a manual driving mode), a parking mode of the vehicle (autonomous parking mode, automatic parking mode, manual parking mode), whether or not a user is on board the vehicle, information related to the user, and the like.

The surrounding information denotes information relate to another object located within a predetermined range around the vehicle and information related to the outside of the vehicle. The surrounding information of the vehicle may be a state of road surface (frictional force) on which the vehicle is traveling, weather, a distance from a front-side (rear-side) vehicle, a relative speed of a front-side (rear-side) vehicle, a curvature of curve when a driving lane is the curve, an ambient brightness of the vehicle, information associated with an object existing in a reference area (predetermined area) based on the vehicle, whether or not an object enters (or leaves) the predetermined area, whether or not a user exists around the vehicle, and information associated with the user (for example, whether or not the user is an authenticated user), and the like.

In addition, the surrounding information may include an ambient brightness, a temperature, a sun position, surrounding object information (a person, a vehicle, a sign, etc.), a type of road surface during driving, a geographic feature, line information, driving lane Information, and information required for autonomous driving/autonomous parking/automatic parking/manual parking mode.

Furthermore, the surrounding information may further include a distance from an object existing around the vehicle to the vehicle, a possibility of collision, a type of the object, a parking space for the vehicle, an object for identifying the parking space (e.g., a parking line, a string, another vehicle, a wall, etc.), and the like.

The vehicle driving information is not limited to the example described above and may include all information generated from the components provided in the vehicle.

Meanwhile, the processor 830 is configured to control one or more devices provided in the vehicle using the interface unit 820.

Specifically, the processor 830 may determine whether at least one of a plurality of preset conditions is satisfied based on vehicle driving information received through the telecommunication control unit 810. Depending on the satisfied conditions, the processor 830 may control the one or more electrical parts in different ways.

In connection with the preset condition, the processor 830 may sense the occurrence of an event in an electrical part and/or application provided in the vehicle and determine whether the sensed event satisfies the preset condition. At this time, the processor 830 may detect the occurrence of an event from information received through the telecommunication control unit 810.

The application is a concept including a widget, a home launcher, and the like, and refers to all types of programs that can be driven on the vehicle. Accordingly, the application may be a program that performs a function of web browser, video playback, message transmission/reception, schedule management, and application update.

In addition, the application may include forward collision warning (FCW), blind spot detection (BSD), lane departure warning (LDW), pedestrian detection (PD), curve speed warning (CSW), and turn-by-turn navigation (TBT).

For example, an event may occur when there is a missed call, when there is an application to be updated, when a message arrives, start on, start off, autonomous driving on/off, LCD awake key, alarm, incoming call, missed notification, or the like.

For another example, an event may occur when a warning set by an advanced driver assistance system (ADAS) occurs or a function set by the ADAS is performed. For example, when a forward collision warning occurs, when a blind spot detection occurs, when a lane departure warning occurs, when a lane keeping assist warning occurs, when autonomous emergency braking function is performed, or the like may be seen as an occurrence of an event.

For another example, when changed from a forward gear to a reverse gear, when an acceleration greater than a predetermined value is generated, when a deceleration greater than a predetermined value is generated, when a power device is changed from an internal combustion engine to a motor, when changed from the motor to the internal combustion engine, or the like may also be seen as an occurrence of an event.

In addition, when various ECUs provided in the vehicle perform a specific function may also be seen as an occurrence of an event.

For an example, when the occurred event satisfies a preset condition, the processor 830 may control the interface unit 820 to display information corresponding to the satisfied condition on the one or more displays.

FIG. 10 is a conceptual view for explaining eHorizon associated with the present disclosure.

Referring to FIG. 10, the path providing device 800 associated with the present disclosure may allow a vehicle 100 to autonomously drive on the basis of eHorizon.

eHorizon may be be classified into categories such as software, a system, a concept, and the like. eHorizon denotes a configuration in which road shape information on a precision map under a connected environment such as an external server (cloud), V2X (vehicle to everything) or the like and real-time events such as real-time traffic signs, road surface conditions, accidents and the like are merged to provide relevant information to autonomous driving systems and infotainment systems.

For an example, eHorizon may refer to an external server (or cloud, cloud server).

In other words, eHorizon may perform the role of transferring a precision map road shape and real time events in front of the vehicle to autonomous driving systems and infotainment systems under an external server/V2X environment.

In order to effectively transfer eHorizon data (information) transmitted from the eHorizon (i.e., external server) to autonomous driving systems and infotainment systems, a data specification and transmission method may be formed in accordance with a standard called "ADASIS (Advanced Driver Assistance Systems Interface Specification)."

The path providing device 800 associated with the present disclosure may use information received from eHorizon for autonomous driving systems and/or infotainment systems.

For example, autonomous navigation systems may be divided into safety aspects and ECO aspects.

In terms of the safety aspect, the path providing device 800 according to the present disclosure may perform an ADAS (Advanced Driver Assistance System) function such as LKA (Lane Keeping Assist), TJA (Traffic Jam Assist) or the like, and/or an AD (AutoDrive) function such as advance, road joining, lane change or the like using road shape information and event information received from eHorizon and surrounding object information sensed through the sensing unit 840 provided in the vehicle.

Furthermore, in terms of the ECO aspect, the path providing device 800 may receive inclination information, traffic light information, and the like on a front road from eHorizon to control the vehicle so as to achieve efficient engine output, thereby enhancing fuel efficiency.

The infotainment system may include convenience aspects.

For an example, the path providing device 800 may receive accident information, road surface condition information, and the like on a front road received from eHorizon to output them on a display module (for example, HUD (Head Up Display), CID, Cluster, etc.) provided in the vehicle to provide guide information for allowing the driver to perform safe driving.

Referring to FIG 10, the eHorizon (external server) may receive the location information of various event information (e.g., road surface condition information 1010a, construction information 1010b, accident information 1010c, etc.) generated from a road and/or road specific speed limit information 1010d from the present vehicle 100 or other vehicles 1020a, 1020b or collect them from an infrastructure (e.g., a measuring device, a sensing device, a camera, etc.) installed on a road.

Furthermore, the event information and the road specific speed limit information may be linked to map information or may be updated.

In addition, the location information of the event information may be divided into units of lanes.

Using the information, the eHorizon (external server) of the present disclosure may provide information required for autonomous driving system and infotainment systems to each vehicle based on a precision map capable of determining a road situation (or road information) in units of lanes.

In other words, the eHorizon (external server) of the present disclosure may provide an absolute high-definition map using an absolute coordinate of information (for example, event information, location information of the present vehicle 100, etc.) associated with a road based on a precision map.

The information associated with a road provided by the eHorizon may be provided only within a predetermined area (predetermined space) with respect to the present vehicle 100.

On the other hand, the path providing device 800 of the present disclosure may acquire location information of another vehicle through communication with the another vehicle. Communication with another vehicle may be carried out through V2X (vehicle to everything) communication, and data transmitted and received to and from another vehicle through V2X communication may be data in a format defined by the LDM (Local Dynamic Map) standard.

The LDM denotes a conceptual data storage located in a vehicle control unit (or ITS station) including information related to a safe and normal operation of an application (or application program) provided in a vehicle (or an intelligent transport system (ITS)). The LDM may, for example, comply with EN standards.

The LDM differs from the ADAS MAP described above in the data format and transmission method. For an example, the ADAS MAP corresponds to a high-definition map having absolute coordinates received from eHorizon (external server), and the LDM may denote a high-definition map having relative coordinates based on data transmitted and received through V2X communication.

The LDM data (or LDM information) is data that is mutually transmitted and received in V2X communication (vehicle to everything) (for example, V2V (vehicle to vehicle) communication, V2I (vehicle to infrastructure) communication, V2P (vehicle to pedestrian) communication.

The LDM is a concept of a storage for storing data transmitted and received in V2X communication, and the LDM may be formed (stored) in a vehicle control device provided in each vehicle.

The LDM data may denote, for example, data that is mutually transmitted and received between a vehicle and a vehicle (infrastructure, pedestrian) or the like. The LDM data may include, for example, a Basic Safety Message (BSM), a Cooperative Awareness Message (CAM), a Decentralized

Environmental Notification Message (DENM), and the like.

The LDM data may be referred to as, for example, a V2X message or an LDM message.

The vehicle control device related to the present disclosure may efficiently manage LDM data (or V2X message) transmitted and received between vehicles efficiently using an LDM.

Based on LDM data received through V2X communication, the LDM may store all relevant information (e.g., the present vehicle (another vehicle) location, speed, traffic light status, weather information, road surface condition, etc.) on a traffic condition (or a road condition for an area within a predetermined distance from a place where a vehicle is currently located) around a place where a vehicle is currently located, and distribute them to other vehicles and continuously update them.

For an example, a V2X application provided in the path providing device 800 registers with the LDM, and receives specific messages such as all DENMs including a warning about a faulty vehicle. Then, the LDM automatically allocates the received information to the V2X application, and the V2X application may control the vehicle based on information allocated from the LDM.

In this manner, the vehicle of the present disclosure may control the vehicle using an LDM formed by LDM data collected through V2X communication.

The LDM associated with the present disclosure may provide information related to a road to the vehicle control device. The information related to a road provided by the LDM provides only relative distances and relative speeds between other vehicles (or generated event points), other than map information with absolute coordinates.

In other words, the vehicle of the present disclosure may construct autonomous driving using an ADAS MAP (absolute coordinate high-definition map) according to the ADASIS standard provided by eHorizon, but the ADAS MAP may be used only to determine a road condition in a surrounding area of the present vehicle (an own vehicle).

In addition, the vehicle of the present disclosure may construct autonomous driving using an LDM (relative coordinate high-definition map) formed by LDM data received through V2X communication, but there is a limit in that accuracy is inferior due to insufficient absolute location information.

The vehicle control device included in the vehicle of the present disclosure may generate a merged precision map using the LDM data received through the VAS communication with the ADAS MAP received from eHorizon and, control the vehicle in an optimized manner using the merged precision map (autonomous driving).

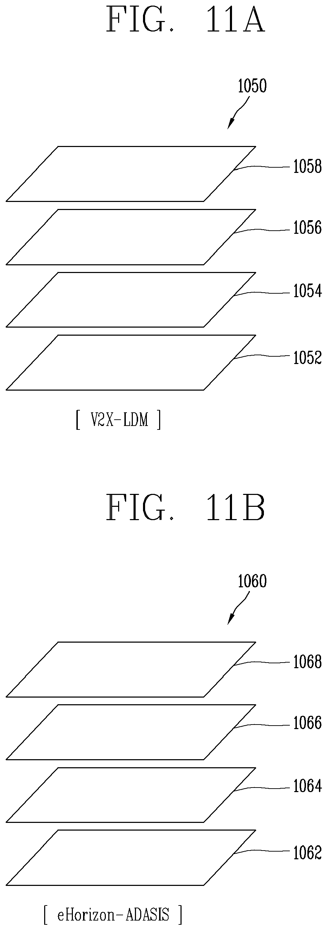

An example of a data format of the LDM data (or LDM) transmitted and received between vehicles through V2X communication is illustrated in FIG. 11A, and an example of a data format of the ADAS MAP received from an external server (eHorizon) is illustrated in FIG. 11B.

Referring to FIG. 11A, the LDM data (or LDM) 1050 may be formed to have four layers.

The LDM data 1050 may include a first layer 1052, a second layer 1054, a third layer 1056, and a fourth layer 1058.

The first layer 1052 may include static information, for example, map information, among information related to a road.

The second layer 1054 may include landmark information (e.g., specific place information specified by a maker among a plurality of place information included in the map information) among information related to the road. The landmark information may include location information, name information, size information, and the like.

The third layer 1056 may include information (e.g., traffic light information, construction information, accident information, etc.) among information related to the road. The construction information, the accident information and the like may include location information.

The fourth layer 1058 may include dynamic information (e.g., object information, pedestrian information, other vehicle information, etc.) among information related to the road. The object information, pedestrian information, and other vehicle information may include location information.

In other words, the LDM data 1050 may include information sensed through the sensing unit of another vehicle or information sensed through the sensing unit of the present vehicle, and may include information related to a road that is modified in real time as it goes from a first layer to a fourth layer.

Referring to FIG. 11B, the ADAS MAP may be formed to have four layers similar to the LDM data.

The ADAS MAP 1060 may denote data received from eHorizon and formed to conform to the ADASIS standard.

The ADAS MAP 1060 may include a first layer 1062 to a fourth layer 1068.

The first layer 1062 may include topology information. The topology information, as information that explicitly defines a spatial relationship, for an example, and may refer to map information.

The second layer 1064 may include landmark information (e.g., specific place information specified by a maker among a plurality of place information included in the map information) among information related to the road. The landmark information may include location information, name information, size information, and the like.

The third layer 1066 may include high-definition map information. The high-definition map information may be referred to as an HD-MAP, and information related to the road (e.g., traffic light information, construction information, accident information) may be recorded in units of lanes. The construction information, the accident information and the like may include location information.

The fourth layer 1068 may include dynamic information (e.g., object information, pedestrian information, other vehicle information, etc.). The object information, pedestrian information, and other vehicle information may include location information.

In other words, the ADAS MAP 1060 may include information related to a road that is modified in real time as it goes from the first layer to the fourth layer, such as the LDM data 1050.

The processor 830 may autonomously drive the vehicle 100.

For example, the processor 830 may autonomously drive the vehicle 100 based on vehicle driving information sensed from various electrical parts provided in the vehicle 100 and information received through the telecommunication control unit 810.

Specifically, the processor 830 may control the telecommunication control unit 810 to acquire the location information of the vehicle. For example, the processor 830 may acquire the location information (location coordinates) of the present vehicle 100 through the location information unit 420 of the telecommunication control unit 810.

Furthermore, the processor 830 may control the first telecommunication control unit 812 of the telecommunication control unit 810 to receive map information from an external server. Here, the first telecommunication control unit 812 may receive an ADAS MAP from the external server (eHorizon). The map information may be included in the ADAS MAP.

Furthermore, the processor 830 may control the second telecommunication control unit 814 of the telecommunication control unit 810 to receive the location information of another vehicle from the another vehicle. Here, the second telecommunication control unit 814 may receive LDM data from another vehicle. The location information of the another vehicle may be included in the LDM data.

The another vehicle denotes a vehicle existing within a predetermined distance from the vehicle, and the predetermined distance may be a communication available distance of the telecommunication control unit 810 or a distance set by a user.

The processor 830 may control the communication unit to receive map information from an external server and the location information of another vehicle from the another vehicle.

In addition, the processor 830 may merge the acquired location information of the vehicle and the received location information of the another vehicle into the received map information, and control the vehicle 100 based on at least one of the merged map information and information related to the vehicle sensed through the sensing unit 840.

Here, map information received from the external server may denote high-definition map information (HD-MAP) included in an ADAS MAP. The high-definition map information may record information related to the road in units of lanes.

The processor 830 may merge the location information of the present vehicle 100 and the location information of another vehicle into the map information in units of lanes. In addition, the processor 830 may merge information related to the road received from an external server and information related to the road received from another vehicle into the map information in units of lanes.

The processor 830 may generate an ADAS MAP necessary for the control of the vehicle using the ADAS MAP received from the external server and information related to the vehicle received through the sensing unit 840.

Specifically, the processor 830 may apply information related to the vehicle sensed within a predetermined range through the sensing unit 840 to map information received from the external server.

Here, the predetermined range may be an available distance from which an electrical part provided in the present vehicle 100 senses information, or may be a distance set by a user.

The processor 830 may apply the information related to the vehicle sensed within a predetermined range through the sensing unit to the map information and then additionally merge the location information of another vehicle therewith to control the vehicle.

In other words, when the information related to the vehicle sensed within a predetermined range through the sensing unit is applied to the map information , the processor 830 may use only the information within the predetermined range from the vehicle, and thus a range capable of controlling the vehicle may be geographically narrow.

However, the location information of another vehicle received through the V2X module may be received from the another vehicle existing in a space out of the predetermined range. It is because a communication available distance of the V2X module communicating with other vehicles through the V2X module is farther than a predetermined range of the sensing unit 840.

As a result, the processor 830 may merge the location information of other vehicles included in LDM data received through the second telecommunication control unit 814 with map information on which information related to the vehicle is sensed to acquire the location information of other vehicles existing in a wider range, and more effectively control the vehicle using the merged information.

For example, it is assumed that a plurality of other vehicles are densely packed forward in a lane in which the present vehicle exists, and also assumed that the sensing unit can sense only the location information of a vehicle right in front of the present vehicle.

In this case, when only information related to the vehicle sensed within a predetermined range is used in the map information, the processor 830 may generate a control command for controlling the vehicle to allow the present vehicle to pass and overtake a vehicle in front.

However, in reality, there may be a situation in which a plurality of other vehicles are densely packed forward, and it is not easy to pass and overtake.

At this time, the present disclosure may acquire the location information of other vehicles received through the V2X module. At this time, the received location information of the other vehicles may acquire the location information of not only a vehicle right in front of the present vehicle 100 but also a plurality of other vehicles in front of the front vehicle.

The processor 830 may additionally merge the location information of a plurality of vehicles acquired through the V2X module with map information to which information related to the vehicle is applied to determine whether it is an inadequate situation to pass and overtake a vehicle in front.

Through the foregoing configuration, the present disclosure may may merge only information related to the vehicle acquired through the sensing unit 840 into high-definition map information to overcome the technical limitations of the related art that allows autonomous driving only in a predetermined range. In other words, the present disclosure may use not only information related to another vehicle received from the another vehicle at a distance greater than the predetermined range through the V2X module but also information related to the vehicle sensed through the sensing unit, thereby performing vehicle control in a more accurate and stable manner.

The vehicle control described in the present specification may include at least one of autonomously driving the vehicle 100 and outputting a warning message related to driving of the vehicle.

Hereinafter, a method of allowing the processor to control a vehicle using LDM data received through the V2X module, an ADAS MAP received from an external server (eHorizon), and information related to the vehicle sensed through the sensing unit provided in the vehicle will be described in more detail with reference to the accompanying drawings.

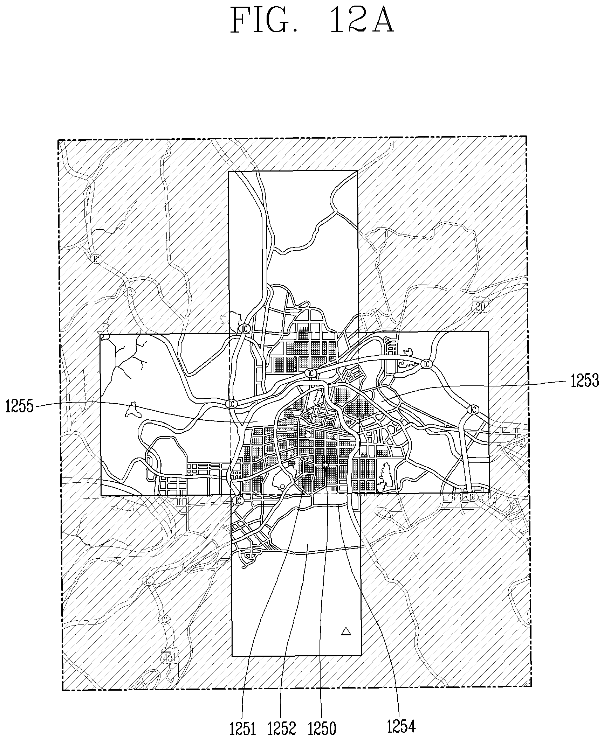

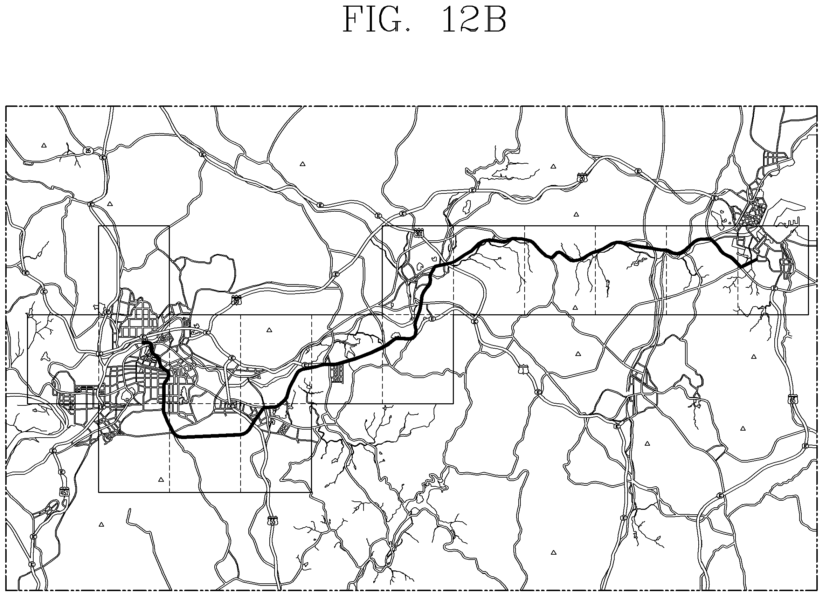

FIGS. 12A and 12B are exemplary views illustrating a method of receiving a high-definition map data by a communication device (or TCU) according to an embodiment of the present disclosure.

The server may divide HD map data into tile units and provide them to the path providing device 800. The processor 830 may receive HD map data in units of tiles from a server or another vehicle through the telecommunication control unit 810. The HD map data received in units of tiles may be referred to as "HD map tiles" or "tile-based map information" in this specification.

The HD map data is partitioned into tiles having a predetermined shape, and each tile corresponds to a different part of the map. When all the tiles are connected, entire HD map data is acquired. Since the HD map data has a high capacity, a high-capacity memory is required for the vehicle 100 to download and use the entire HD map data. It is more efficient to download, use and delete HD map data in units of tiles rather than providing a high-capacity memory in the vehicle 100 with the development of communication technology.

In the present disclosure, for convenience of explanation, a case where the predetermined shape is a rectangle will be described as an example, but it may be modified into various polygonal shapes.

The processor 830 may store the downloaded HD map tiles in the memory 140. In addition, when a storage unit (or cache memory) is provided in the path providing device, the processor 830 may store (or temporarily store) the downloaded HD map tile in the storage unit provided in the path providing device.

The processor 830 may delete the stored HD map tiles. For example, the processor 830 may delete the HD map tiles when the vehicle 100 leaves a region corresponding to the HD map tiles. For example, the processor 830 may delete the HD map tiles after a preset period of time elapses subsequent to storing the HD map tiles.

As illustrated in FIG. 12A, when there is no preset destination, the processor 830 may receive a first HD map tile 1251 including the location 1250 of the vehicle 100. A server 21 may receive the location 1250 data of the vehicle 100 from the vehicle 100, and provide the first HD map tile 1251 including the location 1250 of the vehicle 100 to the vehicle 100. Furthermore, the processor 830 may receive HD map tiles 1252, 1253, 1254, 1255 around the first HD map tile 1251. For example, the processor 830 may receive the HD map tiles 1252, 1253, 1254, 1255 adjacent to the top, bottom, left, and right of the first HD map tile 1251, respectively. In this case, the processor 830 may receive a total of five HD map tiles. For example, the processor 830 may further receive a HD map tile located in a diagonal direction, along with the HD map tiles 1252, 1253, 1254, 1255 adjacent to the top, bottom, right, and left of the first HD map tile 1251, respectively. In this case, the processor 830 may receive a total of nine HD map tiles.

As illustrated in FIG. 12B, when there is a preset destination, the processor 830 may receive a tile associated with a path from the location 1250 of the vehicle 100 to the destination. The processor 830 may receive a plurality of tiles to cover the path.

The processor 830 may receive the entire tiles covering the path at once.

Alternatively, the processor 830 may divide and receive the entire tiles while the vehicle 100 is moving along the path. The processor 830 may receive at least part of the entire tiles based on the location of the vehicle 100 while the vehicle 100 is moving along the path. Then, the processor 830 may continuously receive tiles and delete the received tiles while the vehicle 100 is moving.

The processor 830 may generate electronic horizon data based on HD map data.

The vehicle 100 may be driven with the final destination being set. The final destination may be set based on a user input received through the user interface device 200 or the communication device 220. Depending on the embodiment, the final destination may be set by the driving system 260.

With the final destination being set, the vehicle 100 may be located within a preset distance a first point while driving. When the vehicle 100 is located within a preset distance from the first point, the processor 830 may generate electronic horizon data having the first point as a starting point and the second point as an end point. The first point and the second point may be one point on a path to the final destination. The first point may be described as a point at which the vehicle 100 is located or to be located in the near future. The second point may be described by the horizon mentioned above.

The processor 830 may receive a HD map in an area including a section from the first point to the second point. For example, the processor 830 may request and receive a HD map for an area within a predetermined radius from the section from the first point to the second point.

The processor 830 may generate electronic horizon data for an area including the section from the first point to the second point based on the HD map. The processor 830 may generate horizon map data for an area including the section from the first point to the second point. The processor 830 may generate horizon pass data for an area including the section from the first point to the second point. The processor 830 may generate main pass 313 data for an area including the section from the first point to the second point. The processor 830 may generate sub pass 314 data for an area including the section from the first point to the second point.

When the vehicle 100 is located within a preset distance from the first point, the processor 830 may generate electronic horizon data having the second point as a starting point and a third point as an end point. The second point and the third point may be one point on a path to the final destination. The second point may be described as a point at which the vehicle 100 is located or to be located in the near future. The third point may be described by the horizon mentioned above. On the other hand, electronic horizon data having the second point as the starting point and the third point as the end point may be geographically connected to the foregoing electronic horizon data having the first point as the starting point and the second point as the end point.

The operation of generating electronic horizon data having the second point as the starting point and the third point as the end point may be applied with the foregoing electronic horizon data having the first point as the starting point and the second point as the end point.

According to an embodiment, the vehicle 100 may be driven even when the final destination is not set.

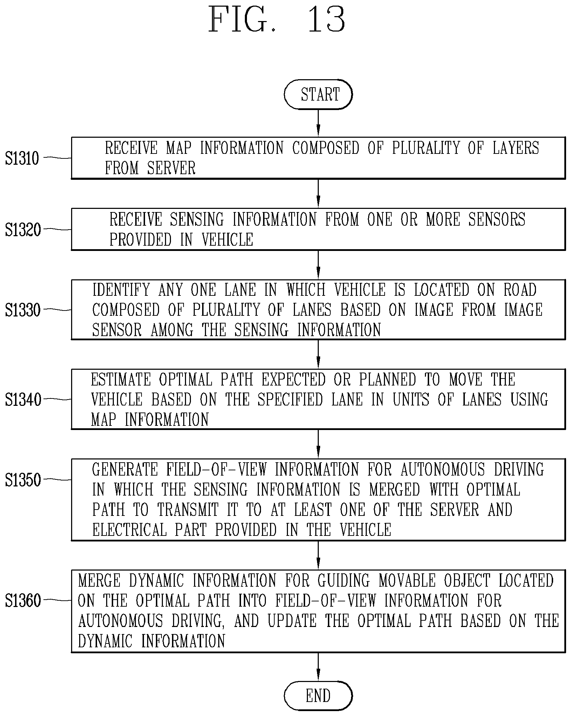

FIG. 13 is a flowchart for explaining a path providing method of the path providing device of FIG. 9.

The processor 830 receives a high-definition map from an external server. Specifically, the processor 830 may receive map information (HD map, high-definition map) composed of a plurality of layers from a server (external server, cloud server) (S1310).

The external server is an example of the telematics communication device 910 as a device capable of communicating through the first telecommunication control unit 812. The high-definition map is composed of a plurality of layers. Furthermore, the high-definition map may include at least one of the four layers described above with reference to FIG. 11B as an ADAS MAP.

The map information may include horizon map data described above. The horizon map data may denote ADAS MAP (or LDM MAP) or HD MAP data formed in a plurality of layers while satisfying the ADASIS standard described with reference to FIG. 11B.

In addition, the processor 830 of the path providing device may receive sensing information from one or more sensors provided in the vehicle (S1320). The sensing information may denote information sensed by each sensor (or information processed after being sensed). The sensing information may include various information according to the types of data that can be sensed by the sensor.

The processor 830 may identify any one lane in which the vehicle 100 is located on a road composed of a plurality of lanes, based on an image (or video) received from an image sensor among sensing information (S1330). Here, the lane denotes a lane in which the vehicle 100 currently equipped with the path providing device 800 is driving.

The processor 830 may determine a lane in which the vehicle 100 equipped with the path providing device 800 is driving by using (analyzing) an image (or video) received from an image sensor (or camera) among the sensors.

In addition, the processor 830 may estimate an optimal path that is expected or planned to move the vehicle 100 based on the identified lane in units of lanes using map information (S1340). Here, the optimal path may denote the foregoing horizon pass data or main pass. However, the present disclosure is not limited thereto, and the optimal path may further include a sub path. Here, the optimal path may be referred to as a Most Preferred Path or Most Probable Path, and may be abbreviated as MPP.

In other words, the processor 830 may predict or plan an optimal path in which the vehicle 100 can travel to a destination based on a specific lane in which the vehicle 100 is driving, using map information.

The processor 830 may generate field-of-view information for autonomous driving in which sensing information is merged with an optimal path to transmit it to at least one of electrical parts provided in a server and a vehicle (S1350).

Here, the field-of-view information for autonomous driving may denote electronic horizon information (or electronic horizon data) described above. The autonomous driving horizon information, as information (or data, environment) used by the vehicle 100 to perform autonomous driving in units of lanes, may denote environmental data for autonomous driving in which all information (map information, vehicles, things, moving objects, environment, weather, etc.) within a predetermined range are merged based on a road or an optimal path including a path in which the vehicle 100 moves, as illustrated in FIG. 10. The environmental data for autonomous driving may denote data (or a comprehensive data environment), based on which the processor 830 of the vehicle 100 allows the vehicle 100 to perform autonomous driving or calculates an optimal path of the vehicle 100.

Meanwhile, the field-of-view information for autonomous driving may denote information for guiding a driving path in units of lanes. This is information in which at least one of sensing information and dynamic information is merged into an optimal path, and finally, may be information for guiding a driving path in units of lanes.

When the field-of-view information for autonomous driving refers to information for guiding a driving path in units of lanes, the processor 830 may generate different field-of-view information for autonomous driving according to whether a destination is set in the vehicle 100.

For an example, when the destination is set in the vehicle 100, the processor 830 may generate field-of-view information for autonomous driving to guide a driving path to the destination in units of lanes.

For another example, when no destination is set in the vehicle 100, the processor 830 may calculate a main path (most preferred path, MPP) having the highest possibility that the vehicle 100 may drive, and generate field-of-view for autonomous driving to guide the main path (MPP) in units of lanes. In this case, the field-of-view information for autonomous driving may further include sub path information on sub paths branched from the most preferred path (MPP) for the vehicle 100 to be movable at a higher probability than a predetermined reference.

The field-of-view information for autonomous driving may be formed to provide a driving path to the destination for each lane indicated on a road, thereby providing more precise and detailed path information. It may be path information conforming to the standard of ADASIS v3.

The processor 830 may merge dynamic information for guiding a movable object located on an optimal path to field-of-view information for autonomous driving, and update the optimal path based on the dynamic information (S1360). The dynamic information may be included in map information received from a server, and may be information included in any one (e.g., a fourth layer 1068) of a plurality of layers.

The electrical part provided in the vehicle may denote various components provided in the vehicle, and may include, for example, sensors, lamps, and the like. The electrical part provided in the vehicle may be referred to as an eHorizon Receiver (EHR) in terms of receiving an ADASIS message including field-of-view information for autonomous driving from the processor 830.

The processor 830 of the present disclosure may be referred to as an eHorizon provider (EHP) in terms of providing (transmitting) an ADASIS Message including field-of-view information for autonomous driving.

The ADASIS message including the field-of-view information for autonomous driving may denote a message in which the field-of-view information for autonomous driving is converted in accordance with the ADASIS standard.

The foregoing description will be summarized as follows.

The processor 830 may generate field-of-view for autonomous driving to guide a road located in the front of the vehicle in units of lanes using the high-definition map.

The processor 830 receives sensing information from one or more sensors provided in the vehicle 100 through the interface unit 820. The sensing information may be vehicle driving information.

The processor 830 may identify any one lane in which the vehicle is located on a road made up of a plurality of lanes based on an image received from an image sensor among the sensing information. For example, when the vehicle 100 is driving in a first lane on a 8-lane road, the processor 830 may identify the first lane as a lane in which the vehicle 100 is located based on the image received from the image sensor.

The processor 830 may estimate an optimal path that is expected or planned to move the vehicle 100 based on the identified lane in units of lanes using the map information.

Here, the optimal path may be referred to as a Most Preferred Path or Most Probable Path, and may be abbreviated as MPP.

The vehicle 100 may drives autonomously along the optimal path. When driving manually, the vehicle 100 may provide navigation information that guides the optimal path to the driver.

The processor 830 may generate field-of-view information for autonomous driving in which the sensing information is merged into the optimal path. The field-of-view information for autonomous driving may be referred to as "eHorizon" or "electronic horizon" or "electronic horizon data" or an "ADASIS message" or a "field-of-view information tree graph."

The processor 830 may generate different field-of-view information for autonomous driving depending on whether or not a destination is set in the vehicle 100.

For an example, when the destination is set in the vehicle 100, the processor 830 may generate an optimal path for guiding a driving path to the destination in units of lanes using field-of-view information for autonomous driving.

For another example, when a destination is not set in the vehicle 100, the processor 830 may calculate a main path in which the vehicle 100 is most likely to drive in units of lanes using field-of-view information for autonomous driving. In this case, the field-of-view information for autonomous driving may further include sub path information on sub paths branched from the most preferred path (MPP) for the vehicle 100 to be movable at a higher probability than a predetermined reference.

The field-of-view information for autonomous driving may be formed to provide a driving path to the destination for each lane indicated on a road, thereby providing more precise and detailed path information. The path information may be path information conforming to the standard of ADASIS v3.

The field-of-view information for autonomous driving may be provided by subdividing a path in which the vehicle must drive or a path in which the vehicle can drive in units of lanes. The field-of-view information for autonomous driving may include information for guiding a driving path to a destination in units of lanes. When the field-of-view information for autonomous driving is displayed on a display mounted on the vehicle 100, guide lines for guiding lanes that can be driven on a map and information within a predetermined range (e.g., roads, landmarks, other vehicles, surrounding objects, weather information, etc.) based on the vehicle may be displayed. Moreover, a graphic object indicating the location of the vehicle 100 may be included in at least one lane on which the vehicle 100 is located among a plurality of lanes included in the map.

Dynamic information for guiding a movable object located on the optimal path may be merged into the field-of-view information for autonomous driving. The dynamic information may be received at the processor 830 through the telecommunication control unit 810 and/or the interface unit 820, and the processor 830 may update the optimal path based on the dynamic information. As the optimal path is updated, the field-of-view information for autonomous driving is also updated.

The dynamic information may be referred to as dynamic information, and may include dynamic data.

The processor 830 may provide the field-of-view information for autonomous driving to at least one electrical part provided in the vehicle. Moreover, the processor 830 may provide the field-of-view information for autonomous driving to various applications installed in the system of the vehicle 100.

The electrical part may denote any communicable device mounted on the vehicle 100, and may include the components described above with reference to FIGS. 1 through 9 (e.g., the components 120-700 described above with reference to FIG. 7). For example, an object detecting apparatus 300 such as a radar and a lidar, a navigation system 770, a vehicle operating apparatus 600, and the like may be included in the electrical part.

In addition, the electrical part may further include an application executable in the processor 830 or a module that executes the application.

The electrical part may perform its own function to be carried out based on the field-of-view information for autonomous driving.

The field-of-view information for autonomous driving may include a path in units of lanes and a location of the vehicle 100, and may include dynamic information including at least one object that must be sensed by the electrical part. The electrical part may reallocate a resource to sense an object corresponding to the dynamic information, determine whether the dynamic information matches sensing information sensed by itself, or change a setting value for generating sensing information.

The field-of-view information for autonomous driving may include a plurality of layers, and the processor 830 may selectively transmit at least one of the layers according to an electrical part that receives the field-of-view information for autonomous driving.

Specifically, the processor 830 may select at least one of a plurality of layers included in the field-of-view information for autonomous driving, based on at least one of a function being executed by the electrical part and a function scheduled to be executed. In addition, the processor 830 may transmit the selected layer to the electronic part, but the unselected layer may not be transmitted to the electrical part.

The processor 830 may receive external information generated by an external device from the external device located within a predetermined range with respect to the vehicle.

The predetermined range is a distance at which the second telecommunication control unit 914 can perform communication, and may vary according to the performance of the second telecommunication control unit 914. When the second telecommunication control unit 914 performs V2X communication, a V2X communication range may be defined as the predetermined range.

Moreover, the predetermined range may vary according to an absolute speed of the vehicle 100 and/or a relative speed with respect to the external device.

The processor 830 may determine the predetermined range based on the absolute speed of the vehicle 100 and/or the relative speed with respect to the external device, and allow communication with an external device located within the determined predetermined range.

Specifically, external devices capable of communicating through the second telecommunication control unit 914 may be classified into a first group or a second group based on the absolute speed of the vehicle 100 and/or the relative speed with respect to the external device. External information received from an external device included in the first group is used to generate dynamic information described below, but external information received from an external device included in the second group is not used to generate the dynamic information. Even when external information is received from an external device included in the second group, the processor 830 ignores the external information.

The processor 830 may generate dynamic information of an object that must be sensed by at least one electrical part provided in the vehicle based on the external information, and may match the dynamic information to the field-of-view information for autonomous driving.

For an example, the dynamic information may correspond to the fourth layer described above with reference to FIGS. 11A and 11B.

As described above in FIGS. 11A and 11B, the path providing device 800 may receive ADAS MAP and/or LDM data. Specifically, the ADAS MAP may be received from the telematics communication device 910 through the first telecommunication control unit 812 and the LDM data may be received from the V2X communication device 920 through the second telecommunication control unit 814.

The ADAS MAP and the LDM data may be composed of a plurality of layers having the same format. The processor 830 may select at least one layer from the ADAS MAP, select at least one layer from the LDM data, and generate the field-of-view information for autonomous driving composed of the selected layers.

For example, the processor 830 may select the first to third layers of the ADAS MAP, select the fourth layer of the LDM data, and generate one field-of-view information for autonomous driving in which four layers are combined into one. In this case, the processor 830 may transmit a reject message for rejecting the transmission of the fourth layer to the telematics communication device 910. It is because the first telecommunication control unit 812 uses less resources to receive some information excluding the fourth layer than to receive all the information including the fourth layer. Part of the ADAS MAP may be combined with part of the LDM data to use mutually complementary information.

For another example, the processor 830 may select the first to fourth layers of the ADAS MAP, select the fourth layer of the LDM data, and generate one field-of-view information for autonomous driving in which five layers are combined into one. In this case, priority may be given to the fourth layer of the LDM data. When there is discrepancy information that does not match the fourth layer of the LDM data in the fourth layer of the ADAS MAP, the processor 830 may delete the discrepancy information or correct the discrepancy information based on the LDM data.

The dynamic information may be object information for guiding a predetermined object. For example, at least one of a location coordinate for guiding the location of the predetermined object, and information for guiding the shape, size, and type of the predetermined object may be included in the dynamic information.

The predetermined object may denote an object that obstructs driving in the corresponding lane among objects that can drive on a road.

For example, the predetermined object may include a bus stopping at a bus stop, a taxi stopping at a taxi stop, a truck dropping a courier, and the like.

For another example, the predetermined object may include a garbage collection vehicle driving at a constant speed or below, or a large vehicle (e.g., truck or container truck, etc.) determined to obstruct view.

For still another example, the predetermined object may include an object indicating an accident, road damage, or construction.

As described above, the predetermined object may include all types of objects disallowing the driving of the present vehicle 100 or obstructing the lane not to allow the vehicle 100 to drive. Traffic signals such as ice roads, pedestrians, other vehicles, construction signs, and traffic lights to be avoided by the vehicle 100 may correspond to the predetermined object and may be received by the path providing device 800 as the external information.

Meanwhile, the processor 830 may determine whether a predetermined object guided by the external information is located within a reference range based on the driving path of the vehicle 100.

Whether or not the predetermined object is located within the reference range may vary depending on the lane on which the vehicle 100 drives and the location of the predetermined object.

For example, external information for guiding a sign indicating the construction of a third lane ahead 1 km while driving on a first lane may be received. When the reference range is set to 1 m with respect to the vehicle 100, the sign is located out of the reference range. It is because when the vehicle 100 continues to drive on the first lane, the third lane is located out of 1 m with respect to the vehicle 100. On the contrary, when the reference range is set to 10 m with respect to the vehicle 100, the sign is located within the reference range.

The processor 830 generates the dynamic information based on the external information when the predetermined object is located within the reference range, but does not generate the dynamic information when the predetermined object is located out of the reference range. In other words, the dynamic information may be generated only when the predetermined object guided by the external information is located on a driving path of the vehicle 100 or within a reference range capable of affecting the driving path of the vehicle 100.

Since the path providing device according to the present disclosure combines information received through the first telecommunication control unit and information received through the second telecommunication control unit into one information during the generation of field-of-view information for autonomous driving, optimal field-of-view information for autonomous driving in which information provided through different telecommunication control units are mutually complemented. It is because the information received through the first telecommunication control unit has a restriction in that it is unable to reflect the information in real time, but the information received through the second telecommunication control unit complements the real-time property.

Further, since when there is information received through the second telecommunication control unit, the processor 830 controls the first telecommunication control unit so as not to receive the corresponding information, it may be possible to use the bandwidth of the first telecommunication control unit less than the related art. In other words, the resource use of the first telecommunication control unit may be minimized.

Hereinafter, the processor 830 capable of performing a function/operation/control method of eHorizon as described above will be described in more detail with reference to the accompanying drawings.

FIG. 14 is a conceptual view for explaining a processor included in a path providing device according of the present disclosure.

As described above, the path providing device 800 of the present disclosure may provide a path to a vehicle, and may include the telecommunication control unit 810, the interface unit 820, and the processor 830 (EHP).

The telecommunication control unit 810 may receive map information composed of a plurality of layers from a server. At this time, the processor 830 may receive map information (HD map tiles) formed in units of tiles through the telecommunication control unit 810.

The interface unit 820 may receive sensing information from one or more sensors provided in the vehicle.

The processor 830 may include (may be provided with) eHorizon software described herein. As a result, the path providing device 830 may be an EHP (Electronic Horizon Provider).

The processor 830 may identify any one lane in which the vehicle is located on a road composed of a plurality of lanes based on an image received from an image sensor among the sensing information.

Furthermore, the processor 830 may estimate an optimal path that is expected or planned to move the vehicle 100 based on the identified lane in units of lanes using the map information.

The processor 830 may generate field-of-view information for autonomous driving in which sensing information is merged with the optimal path to transmit it to at least one of electrical parts provided in the server and the vehicle.

Since the field-of-view information for autonomous driving merged with the optimal path and sensing information is based on an HD map, it may be composed of a plurality of layers, and the description of FIGS. 11A and 11B will be analogically applied to each layer in the same or similar manner.

Dynamic information for guiding a movable object located on the optimal path may be merged into the field-of-view information for autonomous driving.

The processor 830 may update the optimal path based on the dynamic information.

The processor 830 may include a map cacher 831, a map matcher 832, map-dependent APIs (MAL) 833, a path generator 834, a horizon generator 835, an ADASIS generator 836, and a transmitter 837.

The map cacher 831 may store and update map information (HD map data, HD map tiles, etc.) received from the server (cloud server, external server) 1400.

The map matcher 832 may map a current location of the vehicle to the map information.

The map-dependent API (MAL) 833 may convert map information received from the map cacher 831 and information that maps the current location of the vehicle to the map information in the map matcher 832 into a data format that can be used by the horizon generator 835.

Furthermore, the map-dependent API (MAL) 833 may transfer or operate an algorithm to transfer map information received from the map cacher 831 and information that maps the current location of the vehicle to the map information in the map matcher 832 to the horizon generator 835.

The path generator 834 may provide road information on which the vehicle can drive from the map information. In addition, the path generator 834 may receive road information that can be driven from AVN, and provide information required for generating a path (optimal path or sub path) on which the vehicle can drive to the horizon generator 835.

The horizon generator 835 may generate a plurality of path information that can be driven based on the current location of the vehicle and the road information that can be driven.

The ADASIS generator 836 may convert the plurality of path information generated by the horizon generator 835 into a message form to generate an ADASIS message.

In addition, the transmitter 837 may transmit the ADASIS message generated in the form of a message to an electrical part provided in the vehicle.

Hereinafter, each component will be described in more detail.

The map cacher 831 may request tile-based map information (HD map tiles required for the vehicle) among a plurality of tile-based map information (a plurality of HD map tiles) existing in the server 1400.

Furthermore, the map cacher 831 may store (or temporarily store) tile-based map information (HD map tiles) received from the server 1400.

The map cacher 831 nay include an update management module 831b (update manager) that requests and receives at least one map information among the plurality of tile-based map information existing in the server 1400 based on a preset condition being satisfied and a cache memory 831a (map caching) that stores the tile-based map information received from the server 1400.

The cache memory 831a may also be referred to as a tile map storage.

The preset condition may denote a condition for requesting and receiving tile-based map information required for the vehicle from the path providing device (specifically, the map cacher 831) to the server 1400.

The preset condition may include at least one of a case where update for tile-based map information is required in an area where the vehicle is currently present, a case where tile-based map information in a specific area is requested from an external device, and a case where its tile unit size is changed.

For example, the map cacher 831 included in the processor 830 may request and receive tile-based map information in which the vehicle is currently located, tile-based map information in a specific area requested from an external device or tile-based map information whose tile unit size is changed to and from the server based on the preset condition being satisfied.

When new tile-based map information is received from the server 1400, the update management module 831b may delete the existing map information in an area indicated by (included in) the received map information and tile-based map information for an area in which has passed by driving the vehicle from the cache memory 831a.

The map matcher 832 may include a position providing module 832a (position provider) that extracts data indicating the current location of the vehicle from any one of a signal received from a satellite (GNSS (Global Navigation Satellite System) signal (e.g., a signal indicating the current location of the vehicle received from a satellite)), a driving history, and a component provided in the vehicle, a filter 832b (Kalman filter) that filters the data extracted from the position provider to generate location information indicating the current location of the vehicle), and a map matching module 832c (MM) that maps location information indicating the current location of the vehicle onto tile-based map information stored in the map cacher, and performs position control so that the current location of the vehicle is located at the center of the display module.

Here, performing position control so that the current location of the vehicle is located at the center of the display module may include the meaning of mapping map information received through the server 1400 based on the current location of the vehicle.

The map matching module 832c may request the map cacher 831 to receive tile-based map information for mapping the location information from the server when the tile-based map information for mapping the location information does not exist in the map cacher 831.

In this case, the map cacher 831 may request and receive the tile-based map information (HD map tiles) requested from the map matching module 832c to the server 1400 in response to the request to transmit the map information to the map matcher (or map matching module 832c).

In addition, the map matching module 832c may generate location information indicating the current location of the vehicle with a position command 832d and transmit it to the horizon generator 835. The position command may be used to generate horizon information based on the current location of the vehicle when the horizon information is generated by the horizon generator.

The map-dependent API (MAL) 833 may convert map information (tile-based map information, HD map tiles) received from the map cacher 831 and information that maps the current location of the vehicle to the map information in the map matcher 832 into a data format that can be used by the horizon generator 835.

The path generator 834 may extract road information on which the vehicle can drive from the received tile-based map information (HD map tiles), and provide road information extracted to calculate an optimal path and a sub path expected to be driven by the vehicle to the horizon generator.

In other words, the received map information may include various types of roads, for example, a roadway through which vehicles can pass, a road through which vehicles cannot pass (e.g., a pedestrian road, a bicycle road, and a narrow road).

The path generator 834 may extract road information on which a vehicle can drive among various types of roads included in the map information. At this time, the road information may also include direction information for a one-way road.

Specifically, the path generator 834 may include a road management module 834a (route manager) that assigns a score to path information required for driving from a current location of the vehicle to a destination among road information that can be driven, from tile-based map information (HD map tiles) received from the server 1400, a custom logic module 834b (custom logic) that assigns a score to a road after its next intersection according to the characteristics of the road where the vehicle is currently located, and a crossing callback module 834c (crossing callback (CB)) that provides information reflecting the score assigned by the road management module 834a and the score assigned by the custom logic module 834b to the horizon generator 835.

The crossing callback module 834c may perform path guidance based on the score assigned by the road management module 834a (or transmit road information to which the score is assigned by the road management module to the horizon generator) when the vehicle is located on a path corresponding to path information required to drive to the destination, and perform path guidance based on the score assigned by the custom logic module (or transmit road information to which the score is assigned by the custom logic module to the horizon generator) when the vehicle deviates from a path corresponding to path information required to drive to the destination.

This is to allow the horizon generator 845 to generate an optimal path and field-of-view information for autonomous driving required to drive to a destination based on the road information to which the score is assigned by the road management module when the destination is set.

Furthermore, when a destination is not set or when the vehicle deviates from a path corresponding to path information required to drive to the destination, the horizon generator 835 may generate an optimal path or sub path based on a road to which the score is assigned by the custom logic module 834b, and generate field-of-view information for autonomous driving corresponding to the optimal path and the sub path.

The horizon generator 835 may generate a horizon tree graph with respect to a current location of the vehicle, based on the location of the vehicle mapped to map information by the map matcher 832 and road information that can be driven, processed by the path manager.

Here, the horizontal tree graph may denote information in which roads generated with field-of-information for autonomous driving are connected to the optimal path and sub path at each interconnection (or each portion separated from a road) from the current location of the vehicle to the destination.

Such information may be referred to as a horizontal tree graph since it is seen as a tree branch shape by connecting roads generated with field-of-view information for autonomous driving at an intersection.

In addition, field-of-view information for autonomous driving is generated not only for a single path (optimal path) but also for a plurality of paths (an optimal path and a plurality of sub paths) since the field-of-view for autonomous driving is not generated only for an optimal path from the current location of the vehicle to the destination but also for sub paths different from the optimal path (roads corresponding to sub paths other than a road corresponding to the optimal path at an intersection).

Accordingly, the field-of-view information for autonomous driving from the current location of the vehicle to the destination may have a shape in which branches of a tree extend, and accordingly, the field-of-view information for autonomous driving may be referred to as a horizontal tree graph.

The horizon generator 835 (or horizontal generation module 835a) may set a length of a horizontal tree graph 835b and a width of a tree link, and generate the horizontal tree graph with respect to roads within a predetermined range from a road on which the vehicle is currently located, based on the current location of the vehicle and the tile-based map information.

Here, the width of the tree link may denote a width that generates field-of-view information for autonomous driving (e.g., a width allowed to generate field-of-view information for a sub path only up to a predetermined width (or radius) based on an optimal path).

In addition, the horizon generator 835 may connect roads included in the generated horizontal tree graph in units of lanes.

As described above, the field-of-view information for autonomous driving may calculate an optimal path, sense an event, sense vehicle traffic, or determine dynamic information in units of lanes included in a road, other than in units of roads.

Accordingly, the horizontal generator 835 may generate a horizontal tree graph by connecting roads included in the generated horizontal tree graph in units of lanes included in the roads, instead of simply connecting roads to roads included in the generated horizontal tree graph.

Furthermore, the horizon generator 835 may generate different horizontal tree graphs according to a preset generation criterion.

For example, the horizontal generator 835 may generate a different optimal path and sub path based on a user input (or a user request), or based on a criterion for generating the optimal path and sub path (e.g., the fastest path to reach the destination, the shortest path, a free path, a highspeed road priority path, etc.), and accordingly, generate different field-of-view information for autonomous driving.

Since differently generating field-of-view information for autonomous driving may denote generating field-of-view information for autonomous driving for a different road, and thus field-of-view information for autonomous driving generated on a different road may eventually denote generating a different horizontal tree graph.

The horizon generator 835 may generate an optimal path and an sub path on which the vehicle is expected to drive based on road information that can be driven, transmitted from the path generator 834.

In addition, the horizon generator may generate or update the optimal path and sub path by merging dynamic information with field-of-view information for autonomous driving.

The ADASIS generator 836 may convert a horizontal tree graph generated by the horizon generator 835 into an ADASIS message to have a predetermined message form.

As described above, in order to effectively transmit eHorizon (electronic Horizon) data to autonomous driving systems and infotainment systems, the EU OEM (European Union Original Equipment Manufacturing) Association has established a data specification and transmission method as a standard under the name "ADASIS (ADAS (Advanced Driver Assist System) Interface Specification)."

Accordingly, the EHP (the processor 830 of the path providing device) of the present disclosure may include an ADASIS generator 836 that converts a horizontal tree graph (i.e., field-of-view information for autonomous driving or an optimal path and an sub path) into a predetermined message form (e.g., a message form in a format conforming to the standard).

The ADASIS message may correspond to the field-of-view information for autonomous driving. In other words, since a horizontal tree graph corresponding to field-of-view information for autonomous driving is converted into a message form, the ADASIS message may correspond to the field-of-view information for autonomous driving.

The transmitter 837 (transmitter) may include a message queue module 837a that transmits an ADASIS message to at least one of electrical parts provided in the vehicle.

The message queue module 837a may transmit the ADASIS message to the at least one of electrical parts provided in the vehicle in a preset scheme (Tx).

Here, the preset scheme may transmit ADASIS messages with a function (Tx) of transmitting messages or a condition of transmitting messages in the order in which the ADASIS messages were generated, first transmit a specific message based on the message content, or preferentially transmit a message requested from an electrical part provided in the vehicle.

Meanwhile, the above-described path providing device 800 has been described as being provided in the vehicle 100, but the present disclosure is not limited thereto.

The path providing device according to an embodiment of the present disclosure may be provided in the server 1400.

Here, the server 1400 may mean a cloud, a cloud server, the Internet, an external server, or the like. In addition, the server may include all types of external devices capable of transmitting and receiving data to and from the vehicle.

The path providing device 800 of the present disclosure may be provided in the server 1400 instead of in the vehicle 100. In this case, the path providing device 800 may receive various information from the vehicle 100. Then, the path providing device 800 may generate an optimal path on which the relevant vehicle 100 must drive or field-of-view information for autonomous driving, based on the information received from the vehicle 100.

Then, the path providing device 800 may transmit the optimal path or field-of-view information for autonomous driving to the relevant vehicle 100.

As described above, when the path providing device 800 is provided on the server side, in the present disclosure, the server may collect information from the vehicle, and the server may transmit at least one of an optimal path in units of lanes and field-of-view information for autonomous driving that is used during autonomous driving to the vehicle, based on the collected information.

As described above, the path providing device 800 being provided in the server may include a meaning of the EHP being provided in the server.

Furthermore, when the EHP is provided in the cloud server, in the present disclosure, it may be referred to as the term EHC (Electronic Horizon Cloud).

In other words, the EHC (Electronic Horizon Cloud) may denote that the vehicle is provided in a cloud with an EHP for generating field-of-view information for autonomous driving required during autonomous driving or generating an optimal path in units of lanes.

Hereinafter, in case where the path providing device 800 of the present disclosure including an EHP (processor 830) is provided in a server, a method of controlling the path providing device will be described in more detail with reference to the accompanying drawings.

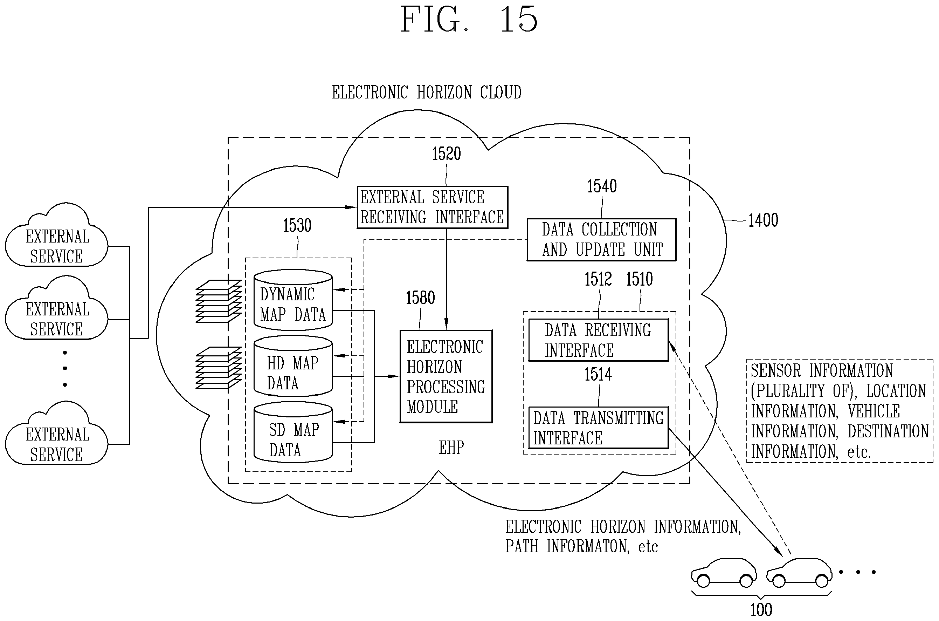

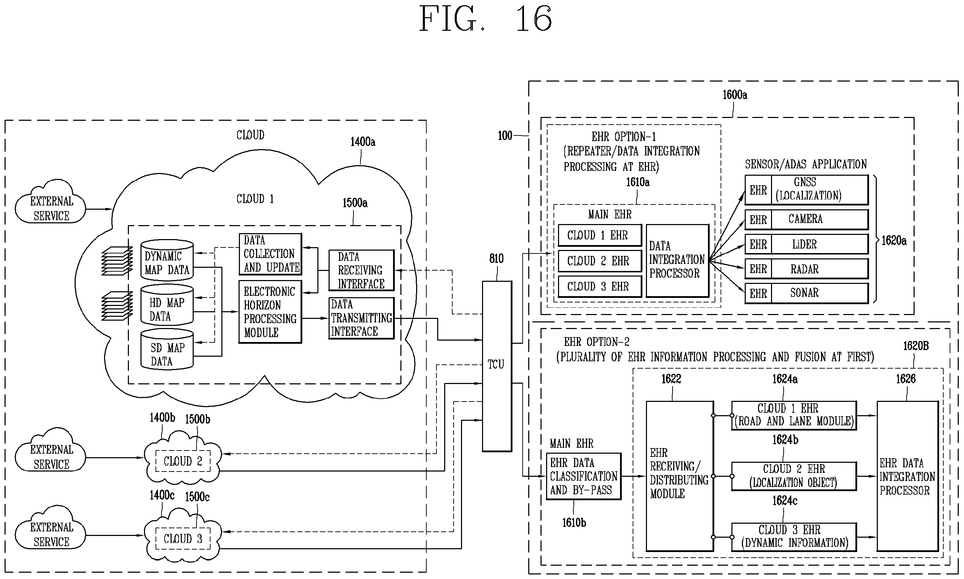

FIG. 15 is a conceptual view for explaining a path providing device provided in a server, and FIG. 16 is a conceptual view for explaining a configuration of a vehicle for receiving information from a path providing device provided in a server.

Referring to FIG. 15, a path providing device 1500 provided in a server 1400 may include a telecommunication control unit 1510, an interface unit 1520, a storage unit 1530, a data collection and update unit 1540, and a processor (EHP module) 1580.

The telecommunication control unit 1510 may include a data receiver 1512 (or data receiving interface) that receives information transmitted from the vehicle and a data transmitter 1514 (or data transmitting interface) that transmits information generated by the processor 1580 to the vehicle.

The interface unit 1520 may perform the role of receiving an external service. For example, the interface unit 1520 may perform the role of receiving information related to external services from another server providing the external services.

The external services may include, for example, various services such as a service that provides map information, a service that informs real-time traffic conditions, and a service that informs weather.

The interface unit 1520 may receive information related to an external service from a server that provides such external services. The role performed by the interface unit 1520 may be performed by the telecommunication control unit 1510.

The storage unit 1530 may store data required for generating an optimal path or field-of-view information for autonomous driving from the path providing device 1500 provided in the server 1400.

For example, at least one of a plurality of map information and dynamic information for guiding a movable object may be stored in the storage unit 1530.

The plurality of map information may include map information generated by different map companies, SD map information, HD map information (high-definition map information), tile-based map information, and the like.

The EHP module (hereinafter, referred to as a processor) 1580 may generate an optimal path and field-of-view information for autonomous driving using at least one of information received through the telecommunication control unit 1510 (data receiver 1512), information received through the interface unit 1520, and information stored in the storage unit 1530.

Furthermore, the processor 1580 may update map information and dynamic information stored in the storage unit 1530 using information received from the vehicle 100 through the data receiver 1512.

In addition, the processor 1580 may generate at least one of an optimal path in units of lanes to be transmitted to a target vehicle and field-of-view information for autonomous driving in which sensing information is merged with the optimal path using map information and dynamic information.

One of the information received from the vehicle may include sensing information sensed through sensors provided in the vehicle. Furthermore, the path providing device 1500 provided in the server 1400 may receive sensing information from one or more vehicles.

The processor 1580 of the path providing device 1500 provided in the server 1400 may receive sensing information from at least one or more vehicles, and reflect the received sensing information on the map information and optimal path to generate field-of-view information for autonomous driving.

In addition, the processor 1580 may control the telecommunication control unit 1510 (specifically, the data transmitter 1514) to transmit at least one of the generated optimal path and field-of-view information for autonomous driving to the target vehicle.

In summary, the path providing device 1500 provided in the server 1400 (cloud server) may store at least one of SD map information, HD map information, and dynamic information in the storage unit 1530.

The data receiver 1512 of the path providing device 1500 may receive information transmitted from the vehicle 100. Here, the information transmitted from the vehicle may include information (e.g., sensor information) sensed through sensors (or sensing modules) provided in the vehicle, location information (e.g., location information sensed through the communication device provided in the vehicle), vehicle information (e.g., a mode in which the vehicle is driving, a speed of the vehicle, a weight of passengers on board the vehicle, which parts of the vehicle are being driven, etc.), destination information, and the like.

The processor 1580 may update at least one of map information and dynamic information using the received information.

Furthermore, the processor 1580 may generate at least one of an optimal path in units of lanes to be transmitted to a target vehicle and field-of-view information for autonomous driving in which sensing information is merged with the optimal path using at least one of map information and dynamic information.

In addition, the data transmitter 1514 may transmit at least one of the optimal path and field-of-view information for autonomous driving generated by the processor 1580 to the target vehicle under the control of the processor 1580.

The target vehicle may include a vehicle in communication with the server 1400, a vehicle that transmits information to the path providing device 1500 provided in the server 1400, and a vehicle capable of receiving information from the path providing device 1500 provided in the server 1400, a vehicle that has requested at least one of an optimal path and field-of-view information for autonomous driving to the path providing device 1500 provided in the server 1400, and the like.

The processor 1580 may be an EHP module capable of performing the foregoing functions of the EHP. The processor 1580 may fabricate and process data using information collected through a data receiver, information collected through an external service receiving interface, map information and dynamic information stored in advance, and the like.

Fabricating and processing data may include a process of generating/updating an optimal path or field-of-view information for autonomous driving requested by the target vehicle, or updating map information and dynamic information.

As illustrated in FIG. 15, the electronic horizon information may include the above-described field-of-view information for autonomous driving, an optimal path, and the like.

Meanwhile, referring to FIG. 16, there may be a plurality of path providing devices provided in a cloud server.

In other words, as illustrated in FIG. 16, a cloud may be provided with a plurality of servers 1400a, 1400b, 1400c, and each server may be provided with a respective path providing device 1500a, as described with reference to FIG. 15.

In other words, as illustrated in FIG. 15, there may be a plurality of servers 1400 provided with the path providing device 1500. The plurality of servers 1400a, 1400b, 1400c may refer to servers operated by different companies (subjects) or servers installed in different locations.

As described above, an optimal path or field-of-view information for autonomous driving generated by the path providing device provided in the at least one server 1400a, 1400b, 1400c, respectively, may be transmitted to the vehicle 100 through the telecommunication control unit 810 (TCU).

At this time, since the server is provided with an electronic horizon provider (EHP) that generates an optimal path or field-of-view information for autonomous driving, the vehicle 100 may be provided with an electronic horizon reconstructor (or receiver) (EHR) for receiving it.

At this time, the EHR provided in the vehicle 100 may be configured in different forms, as illustrated in FIG. 16.

For example, an EHR 1600a of the vehicle 100 according to a first embodiment may include EHRs for receiving information transmitted from a plurality of servers (Cloud 1, Cloud 2, Cloud 3) and a data integration processor for collectively processing data in the main EHR 1610a.

The EHR 1600a of the vehicle 100 according to the first embodiment may receive information from a plurality of servers 1400a, 1400b, 1400c through the telecommunication control unit (TCU) to store information transmitted from each server in an EHR corresponding the each server provided in the main EHR 1600a.

Then, the data integration processor provided in the main EHR 1600a may transmit the received information (e.g., an optimal path or field-of-view information for autonomous driving) to sensors or applications 1620a provided in the vehicle.

Each sensor and application 1620a may be provided with an EHR for receiving information transmitted from the main EHR.

The EHR 1600b of the vehicle 100 according to a second embodiment may be provided with a main EHR 1610b formed to directly transmit data to a sensor or application 1620b without processing data.

The main EHR 1610b may directly transmit information received from a plurality of servers to an EHP receiving/distributing module 1622 provided in the sensor or application 1620b with no additional classification.

The sensor or application 1620b may classify information transmitted for each server by the EHP receiving/distributing module 1622, respectively (Cloud 1 EHR, Could 2 EHR, Cloud 3 EHR). Then, the information classified and stored for each server may be processed in the EHR data integration processor 1626, and the processed information may be transmitted to the sensor or application to be used in the sensor or application.

In summary, the cloud server-based electronic horizon system may include an electronic horizon provider (EHP) performed on the server side and an electronic horizon reconstructor (EHR) performed on the client side (vehicle side).

The path providing devices 1500a, 1500b, 1500c provided in the cloud servers 1400a, 1400b, 1400c, as shown in FIG. 15, may have maps (SD/HD) and dynamic information to receive information (sensor information, location information, destination information, etc.) provided by the vehicle.

In addition, the path providing devices 1500a, 1500b, 1500c provided in the servers 1400a, 1400b, 1400c may collect information provided by the vehicle 100, update map information and dynamic information, and fabricate and process them to generate an optimal path or field-of-view information for autonomous driving.

Then, the path providing devices 1500a, 1500b, 1500c provided in the servers 1400a, 1400b, 1400c may transmit the generated the generated optimal path or field-of-view information for autonomous driving to the target vehicle that has requested the relevant information.

Meanwhile, in the vehicle 100, when there exists EHP information provided by a plurality of cloud servers, the vehicle may include an EHR capable of selectively receiving necessary information. Here, the EHP information may include all types of information generated/processed /fabricated in the EHP, such as an optimal path, field-of-view information for autonomous driving, map information, and dynamic information.

For example, the vehicle communication module (TCU) (telecommunication control unit) 810 may selectively receive EHP information provided by the plurality of cloud servers 1400a, 1400b, and 1400c.

The main EHR 1610a may classify EHP information received from each cloud server by providers (service providers, or server subjects (companies)), and reconstruct it into information required for vehicle sensors.

The in-vehicle sensors 1620a may receive information transmitted from the main HER 1610a and use the information for sensor fusion. Here, the sensor fusion should be understood as a concept including merging the received information with information sensed by the sensor, operating the sensor using the received information, controlling the sensor to perform an operation corresponding to the received information, and the like.

The EHP information provided by each cloud server 1400a, 1400b, 1400c may have advantages and disadvantages according to the characteristics of data possessed by the relevant provider (server) or the path generation algorithm. Accordingly, the EHR of the vehicle may selectively receive to process/integrate the information.

The EHR performed in the vehicle may be configured in two forms, such as a structure 1600a that processes EHP information received from a server to transmit the information to a sensor, and a structure 1600b that bypasses EHP information to a sensor without data processing.

As described above, when the path providing device is provided in a server (cloud, cloud server), it may be possible to perform different control from a case where the path providing device is provided in the vehicle.

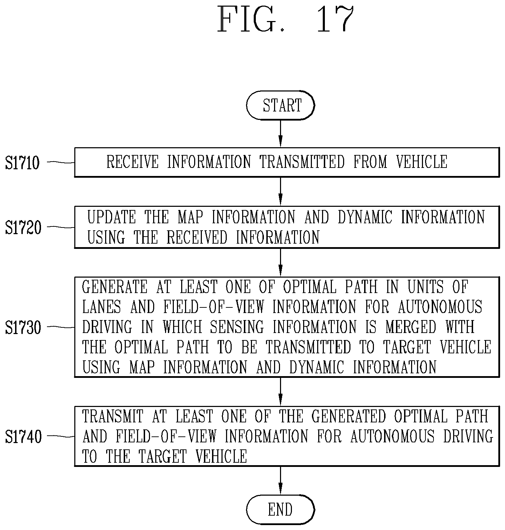

FIG. 17 is a flowchart for explaining a representative control method of the present disclosure.

As described above, the path providing device 1500 provided in the server 1400 may receive information transmitted from the vehicle 100 (S1710).

The EHP (processor 1580) provided in the path providing device 1500 may update map information and dynamic information using the received information (S1720).

In addition, the processor 1580 may generate at least one of an optimal path in units of lanes to be transmitted to a target vehicle and field-of-view information for autonomous driving in which sensing information is merged with the optimal path using map information and dynamic information (S1730).

For example, according to a request from the target vehicle, the processor 1580 may generate only an optimal path, generate only field-of-view information for autonomous driving, or generate both.

Then, the processor 1580 may transmit at least one of the generated optimal path and field-of-view information for autonomous driving to the target vehicle (S1740).

Hereinafter, information including at least one of the optimal path and field-of-view information for autonomous driving will be referred to as EHP information.

In other words, in the present specification, transmitting EHP information to the vehicle by the path providing device 1500 provided in the server 1400 may denote transmitting at least one of the optimal path configured in units of lanes or the field-of-view information for autonomous driving including the optimal path to the vehicle.

The autonomous driving horizon information, as information (or data, environment) used by the vehicle 100 to perform autonomous driving in units of lanes, may denote environmental data for autonomous driving in which all information (map information, vehicles, things, moving objects, environment, weather, etc.) within a predetermined range are merged based on a road or an optimal path including a path in which the vehicle 100 moves.. The environmental data for autonomous driving may denote data (or a comprehensive data environment), based on which the processor 830 of the vehicle control device 800 allows the vehicle 100 to perform autonomous driving or calculates an optimal path of the vehicle 100.

For the field-of-view information for autonomous driving, sensing information may be merged into an optimal path, and may be updated by dynamic information and sensing information.

The target vehicle described in the present specification may include a vehicle that requests at least one of the optimal path and field-of-view information for autonomous driving (i.e., EHP information) to the path providing device provided in the server, or a vehicle subject to transmission when the path providing device transmits EHP information from the server side to the vehicle side.

In other words, the target vehicle may include all types of vehicles capable of communicating with the path providing device provided in the server according to the present disclosure.

When a navigation system of the related art and an EHP of the present disclosure exist in a server, there are some similar parts in that the server generates and transmits a path on which the vehicle drives, but there are differences in a method of configuring and transmitting data.

Specifically, in a case of the navigation system in the related art, entire path information is collectively transmitted.

The navigation system in the related art collectively generates and transmits the entire path information to be driven by the vehicle to the vehicle, based on the current location and destination information of the vehicle.

In addition, when the vehicle drives on a path different from the relevant path information, the entire path to the destination is generated and transmitted again to the vehicle based on the location of the vehicle deviated to the different path.

On the other hand, the path providing device (EHP) of the present disclosure may sequentially transmit EHP information corresponding to a predetermined distance in front of the vehicle in a streaming manner (or in real time).

Furthermore, the path providing device (EHP) of the present disclosure may generate and transmit EHP information (an optimal path, or field-of-view information for autonomous driving) corresponding to a predetermined distance in front of the vehicle in units of lanes.

In addition, the path providing device (EHP) of the present disclosure may generate and transmit EHP information (an optimal path (MPP), a sub path, etc.) corresponding to a predetermined distance based on the current location 1800 of the target vehicle in real time.

In other words, the path providing device (EHP) of the present disclosure may generate/update EHP information within a predetermined distance based on the current location 1800 of the target vehicle to provide the information to the vehicle in real time, in a different manner from the navigation system in the related art that provides an entire path to the destination so as to perform optimal path provision by reflecting events, traffic information, weather information, and the like that occur in real time.

In the case of the existing navigation system, a path from the origin to the destination is generated based on the SD map, and only guide information (turn-by-turn information) at intersections is generated, and an entire path is merely transmitted in a batch.

On the contrary, in the case of the path providing device (EHP) of the present disclosure, it is distinguished from a navigation system in the related art in that an optimal path (Most Prefer Path, MPP) and a sub path are generated units of lanes, in that location information for each object affecting driving (Localization Object information) is provided, in that EHP information corresponding to a predetermined distance in front of the current location is transmitted, and additional EHP is continuously generated and transmitted in real time according to the driving of the vehicle, in that EHP information for vehicle sensors (ADAS, safety purpose) and EHP information for autonomous driving (AD, safety purpose) can be used as information, and in that the received EHP information is filtered to suit a plurality of sensors in the vehicle, and used as an input for sensor fusion, and the like.

On the other hand, the path providing device provided in the repeater of the present disclosure may perform a different function than when the path providing device is provided in the vehicle or server, as it is provided in the repeater other than the vehicle and the server.

Hereinafter, a function that can be performed when the path providing device is provided in the repeater will be described in more detail with reference to the accompanying drawings.

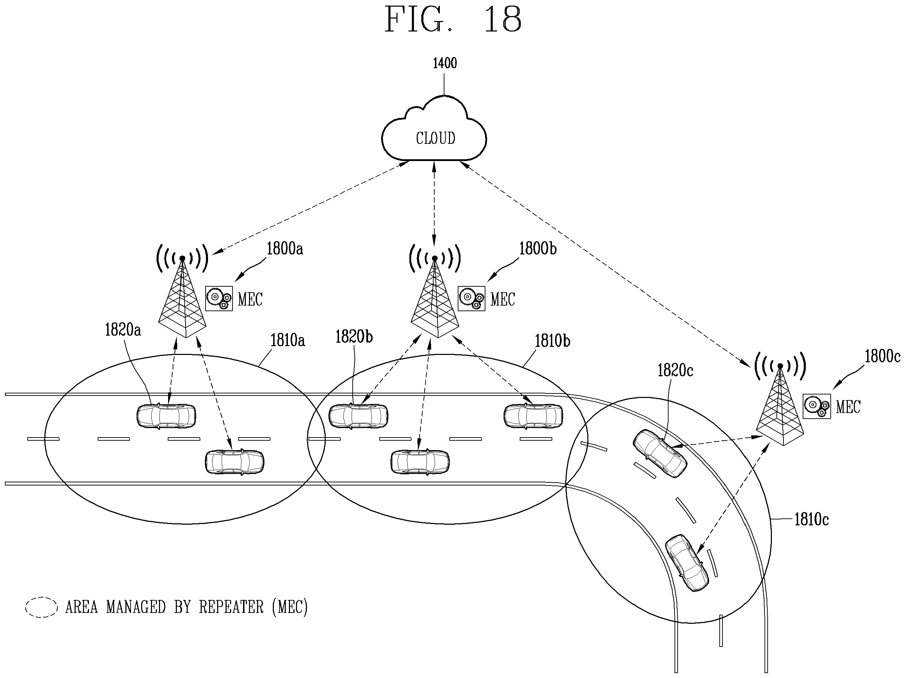

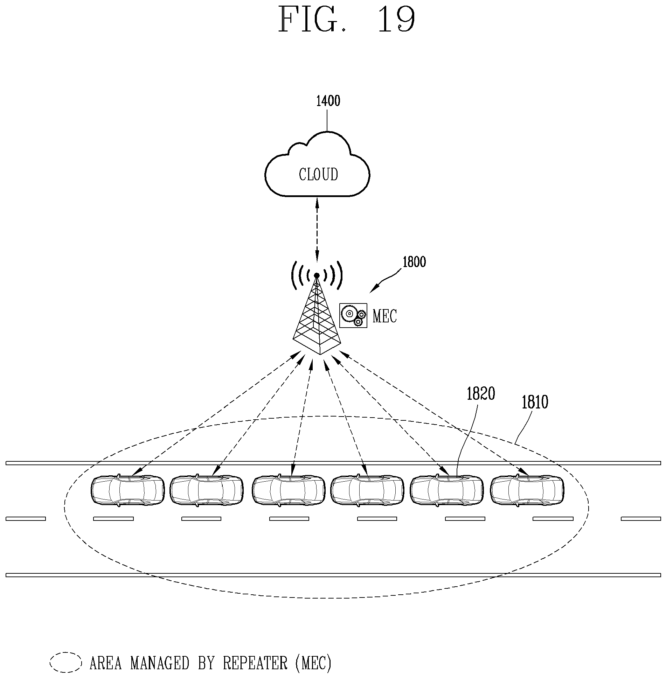

FIGS. 18 and 19 are conceptual views for explaining a path providing device provided in a repeater according to an embodiment of the present disclosure.

As described above, the path providing device according to an embodiment of the present disclosure may be provided in a repeater other than a vehicle or a server.

Referring to FIG. 18, the repeaters 1800a, 1800b, 1800c refer to a device that serves to relay communication between the server 1400 and the vehicle 100 (or target vehicle 1820a, 1820b, 1820c).

The repeater may include, for an example, an infrastructure installed around the road, a repeater of a communication company providing communication services, a repeater allocated to perform communication by region, and the like.

For an example, the repeater may provide a communication service for a specific region, and may serve to efficiently control communication between a server and a vehicle.

MEC (Mobile or Multi-access Edge Computing) technology may be applied to the repeater. MEC may denote a technology that deploys various services and caching contents close to user terminals using distributed cloud computing technology in a wireless base station to alleviate congestion in a mobile core network (e.g., a server) and create new local services.

In other words, the present disclosure may divide data processing concentrated on a server into a plurality of repeaters, relieve a burden on the server, and enhance a local service by reflecting events for an allocated area in each repeater.

The repeater may be linked (or coupled) to communicate with at least one server 1400, and a plurality of repeaters may be linked (or allocated) to a single server.

For example, the server (or cloud server) 1400 according to an embodiment of the present disclosure capable of providing at least one of map information and dynamic information may perform communication with at least one (or a plurality of) repeaters 1800a, 1800b, 1800c.

As illustrated in FIG. 18, each repeater may be installed in different regions. In addition, each repeater may have an allocation area to each other.

For example, the first repeater 1800a may be allocated to (in charge of) a first area (or region) 1810a, and the second repeater 1800b may be allocated to a second region 1810b, and the third repeater 1800c may be allocate to a third area 1810c.

Each repeater may communicate with a vehicle being driving in the allocated area.

For example, the first repeater 1800a may perform communication with a vehicle 1820a driving in the first area 1810a allocated to the first repeater 1800a, and the second repeater 1800b, and the second repeater 1800b may perform communication with a vehicle 1820b driving in the second area 1810b allocated to the second repeater 1800b.

Furthermore, the third repeater 1800c may perform communication with a vehicle 1820c driving in the third area 1810b allocated to the third repeater 1800c.

As illustrated in FIG. 18, each repeater 1800a, 1800b, 1800c may be allocate to (in charge of) different areas 1810a, 1810b, 1810c to perform communication with vehicles 1820a, 1820b,1820c driving in the allocated areas.

For example, the repeater may receive information (e.g., EHP information including at least one of an optimal path in units of lanes and field-of-view information for autonomous driving in which sensing information is merged with the optimal path) to be transmitted to a target vehicle from the server 1400, and transmit the information to the target vehicle.

Meanwhile, the path providing device of the present disclosure may be provided in the repeater. Specifically, the path providing device may be provided in the repeater other than the server or vehicle to help implement MEC technology.

In other words, according to the present disclosure, the path providing device may be provided in the repeater, unlike cloud computing in which the central server 1400 processes all data, to process data at an edge of the vehicle (i.e., repeater). For this reason, according to the present disclosure, even though the amount of data is large, EHP information may be received through a repeater having a close communication distance with the vehicle, thereby facilitating real-time processing and improving security.

Hereinafter, a function in the case where the path providing device is provided in the repeater will be described in more detail.

Referring to FIG. 19, the path providing device of the present disclosure may be provided in the repeater 1800.

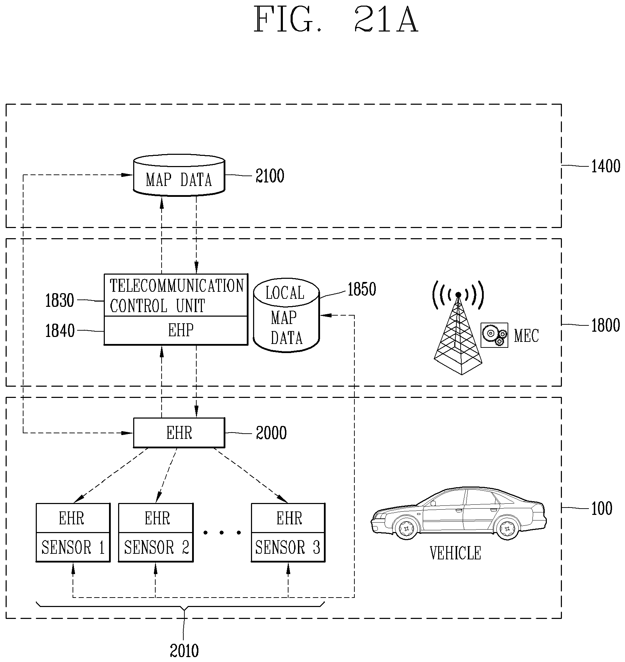

The path providing device provided in the repeater 1800 may include a telecommunication control unit 1830 (refer to FIG. 21A) that performs communication with at least one of the server 1400 and the vehicle 1820 or 100.

In addition, the path providing device may include a processor 1840 (refer to FIG. 21A) that controls the telecommunication control device to receive map information formed from a plurality of layers from the server 1400, and receive dynamic information including sensing information from the vehicle 1820 driving in the allocated area 1810.

The processor may generate EHP information including at least one of an optimal path in units of lanes and field-of-view information for autonomous driving in which sensing information is merged with the optimal path to be transmitted to a target vehicle, using map information and dynamic information.

In other words, the processor of the path providing device provided in the repeater may be an EHP that generates optimal path in units of lanes and/or field-of-view information for autonomous driving described above.

The processor may receive map information from the server, and receive sensing information or dynamic information including sensing information from at least one vehicle 1820 driving in the allocated area 1810 through the telecommunication control unit.

The dynamic information may include sensing information. As described above, the dynamic information may denote information for guiding a movable object. In other words, the movable object may be understood to include not only the moving object itself, but also all objects that are determined to move relatively according to the driving of the vehicle. Accordingly, the dynamic information may include information on all objects existing around the vehicle. Accordingly, the dynamic information may include sensing information related to an object sensed through a sensor provided in the vehicle.

Subsequently, the processor may generate an optimal path and/or field-of-view information for autonomous driving using map information received from the server and dynamic information received from the vehicle.

At this time, the EHP information including at least one of the optimal path and the field-of-view information for autonomous driving may be EHP information for an area allocated to a repeater.

In other words, the path providing device of the present disclosure may generate only EHP information for an area allocated by a repeater as it is provided in the repeater.

In other words, when a repeater mounted with the path providing device is changed, a target area of the EHP information generated by the path providing device may also be changed according to an allocated area of the mounted repeater.

The processor of the path providing device provided in the repeater 1800 may receive first dynamic information related to the allocated area from at least one vehicle 1820 driving in the allocated area 1810.

Here, the first dynamic information related to the allocated area may include all types of information generated in the allocated area 1810 existing in the allocated area 1810 or generated in the allocated area 1810 such as object (or dynamic object) information existing in the allocated region 1810, event information generated in the allocated region 1810, and traffic information in the allocated region 1810, and driving information of another vehicle, or the like.

In addition, the processor may compare first dynamic information received from the vehicle with second dynamic information included in the map information received from the server 1400 to determine whether it is possible to update the map information provided in the server 1400.

Here, third dynamic information to be compared with the first dynamic information may denote dynamic information included in the map information received from the server 1400 (or dynamic information corresponding to the allocated area 1810 of the dynamic information included in the map information).

In other words, the dynamic information may be previously included in the map information, and the second dynamic information to be compared with the first dynamic information received from the vehicle may be dynamic information for an area allocated to the repeater among the dynamic information included in the map information.

When the first dynamic information and the second dynamic information are different from each other, the processor may determine that it is possible to update the map information provided in the server. Furthermore, the processor may upload (transmit) the first dynamic information to the server 1400.

A difference between the first dynamic information and the second dynamic information may denote that the first dynamic information transmitted from the vehicle is more recent information. Accordingly, in order to update the second dynamic information of the map information stored in the server, the repeater 1800 may transmit the first dynamic information on an allocated area received from the vehicle to the server 1400.

The server 1400 that has received the first dynamic information may update the dynamic information for the allocated area of the repeater that has transmitted the information, from the second dynamic information to the first dynamic information.

On the other hand, in order to increase the reliability (accuracy) of the dynamic information for the allocated area of the repeater, the path providing device provided in the repeater of the present disclosure may determine the relevant dynamic information as dynamic information (first dynamic information) for the allocated area when the number of the dynamic information having the same content is more than a predetermined number.

Specifically, the processor may receive dynamic information from a plurality of vehicles, respectively, in the allocated area. At this time, the plurality of vehicles may include a vehicle driving in the allocated area.

When the number of dynamic information (i.e., a plurality of dynamic information) having the same content among the received dynamic information is above a predetermined number, the processor may determine dynamic information including the content as first dynamic information.

For example, when ten dynamic information are received from a plurality of vehicles driving in an allocated area, and dynamic information above a predetermined number (e.g., seven) include content that an accident has occurred in the second lane, the processor may determine dynamic information including the content that an accident has occurred in the second lane as first dynamic information (i.e., first dynamic information received from the vehicle).

If dynamic information having the same content among the plurality of dynamic information is less than a predetermined number, the processor may hold the determination of first dynamic information until the number of the dynamic information having the same content is above a predetermined number.

The processor may upload to the server 1400 only the first dynamic information determined based on whether the number of dynamic information having the same content among the received dynamic information (a plurality of dynamic information) is above a predetermined number.

Through such a configuration, the present disclosure may provide a system capable of accurately collecting dynamic information on an area (local area) allocated to a repeater, and reflecting it on a server.

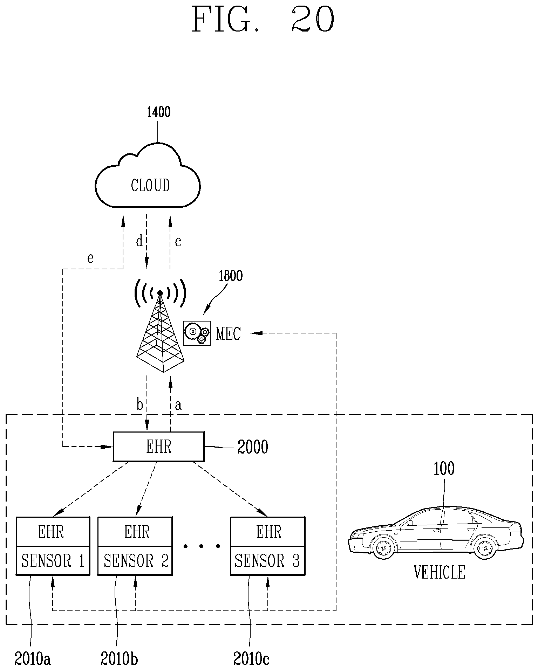

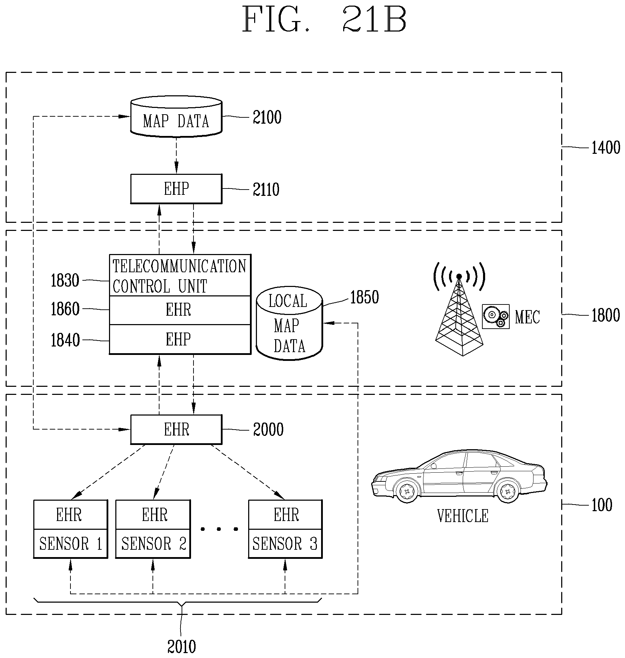

FIGS. 20, 21A and 21B are conceptual views for explaining various embodiments of a server, a repeater, and a vehicle when a path providing device according to an embodiment of the present disclosure is provided in the repeater.

Referring to FIG. 20, the path providing device provided in the repeater 1800 of the present disclosure may receive location information of a target vehicle from the target vehicle 100 driving in an allocated area. In addition, the path providing device provided in the repeater 1800 may receive sensing information (or dynamic information including sensing information) sensed by the target vehicle from the target vehicle 100 (a).

In other words, the processor of the path providing device provided in the repeater 1800 may receive location information from the target vehicle that has requested EHP information in the allocated area.

Then, the processor may generate EHP information that is usable in the target vehicle based on the received location information and map information received from a server. Then, the processor may transmit the generated EHP information to the target vehicle (b).

Furthermore, the processor may determine dynamic information with a predetermined number or more of dynamic information having the same content among the received dynamic information as meaningful data, and transmit the relevant dynamic information to the server (c).

For example, the dynamic information may include traffic signs, speed limit changes, road signs displayed on the road, and may include event information such as accidents, constructions, and weather.

The server 1400 may update map information by reflecting the dynamic information received from the repeater, and transmit the updated map information to the repeater (d).

On the other hand, the vehicle 100 may receive EHP information directly from the server 1400 instead of the repeater 1800 when a predetermined condition is satisfied (e).

For example, in the vehicle 100 may receive second EHP information from the server instead of the repeater when the first EHP information received from the repeater 1800 is different from the second EHP information transmitted from the server 1400, and map information of the server generating the second EHP information is a more recent version.

For another example, the vehicle 100 may receive EHP information directly from the server 1400 when it is required to receive EHP information for a wider range than an area allocated by the repeater or when it leaves an allocated area of the repeater in communication.

The vehicle 100 may include an electronic horizon reconstructor (or receiver) (EHR) that receives EHP information received from the server 1400 or the repeater 1800. Then, the EHR may transfer (distribute, transmit) EHP information received at an electrical part (e.g., one or more sensors or ADAS applications required to perform autonomous driving) 2010 provided in the vehicle.

On the other hand, the EHP information that is usable in a target vehicle may include at least one of an optimal path in units of lanes and field-of-view information for autonomous driving in which sensing information is merged with the optimal path.

The processor may transmit the generated EHP information to a target vehicle, and generates and transmits it in real time whenever the target vehicle drives in the allocated area.

In other words, the path providing device may generate and transmit EHP information from the current location of the vehicle to the destination as a whole, but may provide information in units of lanes and transmit only EHP information for a predetermined distance ahead based on the target vehicle in order to reflect road conditions being changed in real time.

Accordingly, the path providing device may generate and transmit EHP information for a new area in real time whenever the target vehicle drives.

Similarly, when the path providing device is provided in the repeater, the processor may generate and transmit EHP information for the allocated area in real time whenever the target vehicle travels within the allocated area.

Meanwhile, when the target vehicle leaves the allocated area, the processor may stop the transmission of EHP information.

The processor may stop the transmission of EHP information when the target vehicle leaves the allocated area, and transmit at least one of EHP information and vehicle information transmitted from the target vehicle to a new repeater allocated to the new area.

In other words, the processor may transmit the previously generated EHP information to the new repeater when the target vehicle leaves the allocated area to enter the allocation area of the new repeater.

The new repeater may generate new EHP information in an area allocated by the new repeater by reflecting a path in units of lanes that the target vehicle has driven so far, a driving pattern, and destination information, and the like using the received EHP information, and transmit the new EHP information to the vehicle.

Meanwhile, as illustrated in FIG. 21A, the path providing device provided in the repeater may further include a memory 1850 (local map data) for storing partial map information for the allocated area.

The processor may update the partial map information using dynamic information transmitted from the vehicle included in the allocated area.

In addition, the processor may generate the EHP information of the target vehicle driving in the allocated area using the partial map information.

The processor 1840 of the path providing device provided in the repeater 1800 may receive map information from a storage 2100 provided in the server 1400 through the telecommunication control unit 1830, and receive dynamic information including sensing information from the vehicle 100.

On the other hand, for rapid EHP generation in the allocated area and rapid update of dynamic information, the path providing device provided in the repeater 1800 of the present disclosure may store partial map information for the allocated area (or corresponding to the allocated area) in advance in the memory 1850.

Since regions allocated for each repeater are different, partial map information stored in each repeater may be different.

The path providing device provided in the repeater of the present disclosure may generate EHP information using partial map information for the allocated area of the repeater, and update dynamic information to the partial map information, thereby omitting a process of receiving map information and uploading dynamic information from and to the server or significantly reducing the number of times so as to enhance processing speed.

On the other hand, as illustrated in FIG. 21A, unlike the case where the path providing device is provided only on the repeater 1800, the path providing device may be provided in both the server 1400 and the repeater 1800 as illustrated in FIG. 21B.

In this case, the processor 2110 of the path providing device provided in the server 1400 may generate EHP information that is usable in the target vehicle 100 based on map information provided in the storage 2100 of the server 1400, and dynamic information received from the repeater 1800, and the location information of the target vehicle 100.

Then, the server 1400 may directly transmit the generated EHP information to the target vehicle 100 or may transmit it to the repeater 1800.

In order to receive EHP information generated by the server 1400, the path providing device provided in the repeater 1800 may further include an EHR 1860 for receiving EHP information, and changing (converting) information in a form that is usable in the vehicle 100.

In addition, the processor 1840 of the repeater 1800 may update EHP information received through the EHR 1860 by reflecting dynamic information received from the vehicle driving in the allocated area, and transmit the updated EHP information to the target vehicle.

Hereinafter, the configuration of a vehicle that receives EHP information when a path providing device is provided in a repeater will be described in more detail with reference to the accompanying drawings.

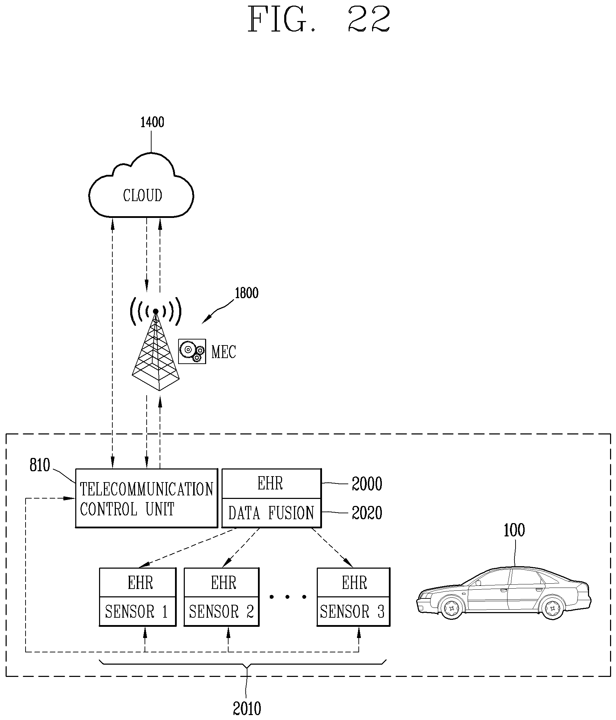

FIG. 22 is a conceptual view for explaining a function of a vehicle capable of receiving EHP information from a server and a repeater according to an embodiment of the present disclosure.

The path providing device provided in the vehicle that is communicable with at least one of the repeater and the server may include a telecommunication control unit 810 performing communication with the repeater 1800.

Furthermore, the path providing device provided in the vehicle may include a processor 2000 (EHR) that receives EHP information including at least one of an optimal path in units of lanes and field-of-view information for autonomous driving in which sensing information is merged with the optimal path from the repeater 1800 through the telecommunication control unit 810, and distributes the received EHP information to at least one electrical part 2010 provided in the vehicle.

The processor 2000 provided in the vehicle 100 may be an electronic horizon receiver (EHR). In other words, the processor 2000 may receive EHP information generated by the repeater 1800 (or the server 1400), and change (or convert) the information to a form that is usable in the electrical part 2010.

The processor 2000 may output an optimal path in units of lanes or autonomously drive the vehicle using the received EHP information.

To this end, the processor 2000 may transmit the optimal path in units of lanes to a display module provided in the vehicle from the received EHP information and output the optimal path in units of lanes to the display module.

In addition, in order to autonomously drive the vehicle, the processor 2000 may transmit field-of-view information for autonomous driving from the received EHP information to at least one electrical part 2010 (sensor or ADAS application) required to perform autonomous driving.

EHR may also be provided in each electrical part 2010. The EHR provided in each electronic part 2010 may perform the role of converting the form of information to allow EHP information to be used in each electrical part.

For example, the EHR provided in the camera sensor may convert EHP information to be usable in the camera sensor.

Meanwhile, the processor 2000 of the path providing device provided in the vehicle may search for a new repeater when it is detected that the vehicle leaves the allocated area of the repeater 1800 in communication.

For example, the processor 2000 may sense (determine) that the vehicle leaves the allocated area of the repeater 1800 in communication based on whether communication with the repeater 1800 in communication stops, the communication speed drops below a predetermined speed, or the vehicle leaves partial map information included in the EHP information received from the repeater 1800.

When a new repeater is searched, the processor 2000 may receive EHP information from the new repeater. In other words, when a new repeater allocated to (in charge of) a new area where the vehicle has entered is searched, the processor 2000 may receive EHP information for the newly entered area while driving the newly entered area from the new repeater.

Meanwhile, when a new repeater is not searched, the processor 2000 may request and receive EHP information from the server 1400 through the telecommunication control unit 810.

As described above, the telecommunication control unit 810 provided in the vehicle may perform communication with the server 1400 as well as the repeater 1800.

The processor 2000 of the vehicle 100 may receive first EHP information from the repeater 1800 and the second EHP information from the server 1400 through the telecommunication control unit 810.

In other words, the processor 2000 of the vehicle 100 may receive EHP information from the repeater 1800 or the server 1400, or may receive EHP information from both the repeater 1800 and the server 1400.

The processor 2000 may process the first EHP information and the second EHP information in a predetermined manner when the EHP information is received from both the repeater 1800 and the server 1400.

For example, when the first EHP information and the second EHP information are the same, the processor 2000 may receive the first EHP information from the repeater 1800, and stop receiving the second EHP information from the server 1400.

In other words, the processor 2000 of the vehicle 100 may receive EHP information from the repeater 1800 closer to the vehicle 100 when the EHP information received from the server 1400 and the repeater 1800 are the same, and stop receiving data from the server 1400 to reduce server overload (edge computing).

In addition, when the first EHP information and the second EHP information are different, the processor 2000 may transmit different EHP information to an electrical part provided in the vehicle according to the type of the electrical part provided in the vehicle.

For example, when the first EHP information received from the repeater 1800 and the second EHP information received from the server 1400 are different, the processor 2000 may transmit the first EHP information to an electrical part (e.g., sensor) that senses an object (or environment) of the vehicle, and transmit the second EHP information to an ADAS application performing autonomous driving of the vehicle according to the type of electronic part provided in the vehicle.

For example, the processor may may transmit first EHP information on which information in a local area is more accurately reflected, to the sensor, and transmit second EHP information generated by the server based on information on a wider range to the destination, to the ADAS application.

Through this, the present disclosure may provide a data processing method of a vehicle that is usable by selecting only information optimized for autonomous driving of the vehicle.

In addition, when the first EHP information and the second EHP information are different, the processor 2000 may autonomously drive the vehicle using at least one of the first EHP information and the second EHP information.

To this end, the processor 2000 of the vehicle 100 may be provided with a data fusion unit 2020. The data fusion unit 2020 may merge or select information required for autonomous driving when the first EHP information received from the repeater 1800 is different from the second EHP information received from the server 1400.

For example, when the first EHP information and the second EHP information are different from each other, the data fusion unit 2020 may use an optimal path included in the first EHP information for the optical path in units of lanes, and select field-of-view information for autonomous driving included in the second EHP information for the field-of-view information for autonomous driving, and transmit them to an electrical part provided in the vehicle.

For another example, when the first EHP information and the second EHP information are different, the data fusion unit 2020 may merge an optimal path included in each EHP information and field-of-view information for autonomous driving, and transmit them to an electrical part provided in the vehicle.

In this case, both an optimal path generated by the server and an optimal path generated by the repeater may be displayed on the display module provided in the vehicle, and either one may be selected by user selection.

Similarly, the vehicle may notify a passenger on board the vehicle that both the field-of-view information for autonomous driving generated by the server and the field-of-view information for autonomous driving generated by the repeater exist, and may select either one by passenger selection.

The vehicle may perform autonomous driving based on at least one of the selected optimal path and field-of-view information for autonomous driving.

The function/operation/control method performed by the data fusion unit 2020 may also be performed by the processor 2000 of the vehicle 100.

The effects of a path providing device and a path providing method thereof according to the present disclosure will be described as follows.

First, the present disclosure may provide a path providing device capable of controlling a vehicle in an optimized manner when the path providing device is provided in a repeater.

Second, the present disclosure may allow a path providing device to be provided in a repeater that relays communication between a server and a vehicle, thereby preventing the server from being overloaded.

Third, the present disclosure may allow a path providing device to be provided in a repeater that relays communication between a server and a vehicle, thereby providing a new path providing method capable of generating EHP information for an area allocated by the repeater in an optimized manner and transmitting it to the vehicle included in the allocated area.

The foregoing present disclosure may be implemented as codes (an application or software) readable by a computer on a medium written by the program. The control method of the above-described autonomous vehicle may be implemented by codes stored in a memory or the like.

The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include a processor or controller. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A path providing device provided in a vehicle capable of communicating with at least one of a repeater and a server, the path providing device, comprising:
a telecommunication control unit that performs communication with the repeater; and
a processor that receives EHP information comprising at least one of an optimal path in units of lanes and field-of-view information for autonomous driving in which sensing information is merged with the optimal path from the repeater, and distributes the the received EHP information to at least one electrical part provided in the vehicle.

2. The path providing device of claim 1, wherein the processor receives the EHP information generated by the repeater to change the information to a form that is usable in the electrical part.

3. The path providing device of claim 1, wherein the processor outputs an optimal path in units of lanes or autonomously drive the vehicle using the received EHP information.

4. The path providing device of claim 1, wherein the processor searches for a new repeater when it is sensed that the vehicle leaves an allocated area of the repeater in communication.

5. The path providing device of claim 4, wherein the processor receives EHP information from the new repeater when the new repeater is searched, and receives EHP information from a server through the telecommunication control unit when the new repeater is not searched.

6. The path providing device of claim 1, wherein the telecommunication control unit performs communication with a server, and
the processor receives first EHP information from a repeater and receive second EHP information from a server through the telecommunication control unit.

7. The path providing device of claim 6, wherein the processor processes the first EHP information and the second EHP information in a preset manner.

8. The path providing device of claim 7, wherein the processor receives the first EHP information from the repeater, and stop receiving the second EHP information from the server when the first EHP information and the second EHP information are the same.

9. The path providing device of claim 7, wherein the processor transmits different EHP information to an electrical part provided in the vehicle according to the type of the electrical part provided in the vehicle when the first EHP information and the second EHP information are different from each other.

10. The path providing device of claim 9, wherein the processor autonomously drives the vehicle using at least one of the first EHP information and the second EHP information when the first EHP information and the second EHP information are different from each other.
